# EUROPÄISCHE PATENTSCHRIFT

(11) **EP 3 013 646 B1**
(45) Veröffentlichungstag und Bekanntmachung des Hinweises auf die Patenterteilung: **11.10.2017**
(21) Anmeldenummer: 14731668.1
(22) Anmeldetag: 23.06.2014
(51) Int. Cl.: B60R 1/06, B60R 1/076, E05D 11/00

(54) **GELENKVORRICHTUNG ZUR SCHWENKBAREN VERBINDUNG EINES ERSTEN MIT EINEM ZWEITEN GELENKARM, SOWIE SPIEGELHALTERUNG UND SPIEGEL MIT DERARTIGER GELENKVORRICHTUNG**
JOINT DEVICE FOR PIVOTALLY CONNECTING A FIRST AND A SECOND JOINT ARM, AS WELL AS A MIRROR RETAINER AND A MIRROR COMPRISING SUCH A JOINT DEVICE
DISPOSITIF ARTICULÉ PERMETTANT LA LIAISON PIVOTANTE ENTRE UN PREMIER ET UN DEUXIÈME BRAS ARTICULÉ, ÉLÉMENT DE RETENUE DE RÉTROVISEUR, ET RÉTROVISEUR POURVU D'UN DISPOSITIF ARTICULÉ DE CE TYPE

(30) Priorität: 26.06.2013 DE 102013212339; 28.06.2013 DE 102013212769
(43) Veröffentlichungstag der Anmeldung: 04.05.2016
(73) Patentinhaber: MEKRA LANG GmbH & Co. KG, 91465 Ergersheim (DE)
(72) Erfinder: LANG, Werner Dr., 91465 Ergersheim (DE); HECHT, Georg, 91629 Weihenzell (DE); POPP, Albrecht, 91629 Weihenzell (DE); PAULY, Markus, 91438 Bad Windsheim (DE)
(74) Vertreter: Winter, Brandl, Fürniss, Hübner, Röss, Kaiser, Polte - Partnerschaft mbB
(86) Internationale Anmeldenummer: PCT/EP2014/063140
(87) Internationale Veröffentlichungsnummer: WO 2014/206926

(56) Entgegenhaltungen:
- EP-A1- 0 527 455
- EP-A2- 0 139 509
- US-A1- 2007 211 356
- US-A1- 2008 310 041

## Beschreibung

Die vorliegende Erfindung bezieht sich auf eine Gelenkvorrichtung zur schwenkbaren Verbindung eines ersten mit einem zweiten Gelenkarm. Eine derartige Gelenkvorrichtung kann im Rahmen einer Spiegelhalterung zur Befestigung eines Spiegels an einem Fahrzeug verwendet werden, wobei der eine Gelenkarm ein an dem Fahrzeug befestigbares Sockelteil umfasst und der andere Gelenkarm den Spiegel tragen kann.

DE 20 2009 013 767 U1 offenbart eine als Rastgelenk ausgebildete Gelenkvorrichtung mit einem ersten Gelenkarm und einem zweiten Gelenkarm, die um eine Rastgelenkachse zueinander verschwenkbar und in Rastpositionen fixierbar miteinander verbunden sind, und einen ersten und einen zweiten Riegelbolzen. Der erste Gelenkarm umfasst zwei axial beabstandete, aufeinander zu weisende Lagerflächen. Der zweite Gelenkarm umfasst einen Lagerbock mit axial entgegengesetzten Enden, an denen voneinander weg weisende Gegenlagerflächen ausgebildet sind. Eine der Lagerflächen wirkt mit einer der Gegenlagerflächen und die andere der Lagerflächen wirkt mit der anderen der Gegenlagerflächen zusammen. Der erste Riegelbolzen durchsetzt axial die zusammenwirkenden eine Lager- und eine Gegenlagerfläche, und der zweite Riegelbolzen durchsetzt koaxial die zusammenwirkenden andere Lager- und Gegenlagerfläche. Nachteilig bei dieser Gelenkvorrichtung ist, dass zwei Riegelbolzen erforderlich sind, die bei der Montage der Gelenkvorrichtung unabhängig voneinander und in axial zueinander entgegengesetzten Richtungen jeweils durch die (einen oder anderen) miteinander zusammenwirkenden Lager- und Gegenlagerflächen eingeführt und verriegelt werden müssen.

EP 2 331 367 B1 offenbart eine Gelenkvorrichtung, bei der ein Drehgelenk einen an einem Sockelteil ausgebildeten Lagerbock mit einer als Lagerbund wirkenden, zylinderinnenwandförmigen Lagerfläche, ein in dem Spiegelarm ausgebildetes Gegenlager mit einer zylinderaußenwandförmigen Lagerfläche und einen in dem Sockelteil gesicherten Riegelbolzen, dessen Sicherung im Sockelteil als Bajonettverschluss ausgebildet ist, umfasst. Nachteilig bei dieser Gelenkvorrichtung ist, dass die axiale Länge des Drehgelenks, insbesondere die axiale Länge der Lagerflächen, im Vergleich zur Länge des Spiegelarms kurz ist und das Drehgelenk hinsichtlich seiner Konstruktion im Wesentlichen ein Einpunkt-Radiallager ist, so dass das Drehgelenk ein durch die Passgenauigkeit der zusammenwirkenden Lagerflächen bestimmtes radiales Spiel zwischen dem Spiegelarm und dem Sockelteil aufweist.

EP 1 886 873 B1 offenbart eine Gelenkvorrichtung mit einem an einem Fahrzeug befestigbaren Sockelteil, an dem ein Lagerbock mit einer axialen Durchgangsöffnung ausgebildet ist, und einem über ein Rastgelenk mit dem Sockelteil verbundenen Spiegelarm mit einem ersten Lagerarm und einem zweiten Lagerarm, die den Lagerbock axial umgreifen. Im ersten Lagerarm ist eine als Rastfläche ausgebildete erste Gegenlagerfläche und im zweiten Lagerarm eine als Rastfläche ausgebildete zweite Gegenlagerfläche ausgebildet. Die Gelenkvorrichtung umfasst ferner ein Gelenkachsenbauteil, das in der Durchgangsöffnung des Lagerbocks angeordnet ist und das am einen axialen Ende eine als Rastfläche ausgebildete erste Lagerfläche und am axial entgegengesetzten Ende eine als Rastfläche ausgebildete zweite Lagerfläche aufweist. Die als Rastfläche ausgebildeten erste und zweite Lagerflächen des Gelenkachsenbauteils wirken mit den als Rastfläche ausgebildeten ersten und zweiten Gegenlagerflächen des ersten und zweiten Lagerarms zusammen. Die Mantelfläche des Gelenkachsenbauteils bildet eine zylinderaußenwandförmige Lagerfläche, und Abschnitte der Innenwandoberfläche der Durchgangsöffnung des Lagerbocks bilden komplementäre zylinderinnenwandförmige Gegenlagerflächen. Das Gelenkachsenbauteil umfasst ferner ein zwischen den beiden Rastflächen angeordnetes Federelement, das die als Rastfläche ausgebildeten erste und zweite Lagerflächen in axial entgegengesetzten Richtungen gegen die als Rastfläche ausgebildeten erste und zweite Gegenlagerfläche der Lagerarme vorspannt. Dadurch erübrigt sich ein das Rastgelenk zusammenhaltender Bolzen. Nachteilig bei dieser Gelenkvorrichtung ist, dass die axiale Länge des Rastgelenks, insbesondere der axiale Abstand der Lager- und Gegenlagerflächen, im Vergleich zur Länge des Spiegelarms, ziemlich kurz ist und das Rastgelenk ein durch die Passgenauigkeit der zusammenwirkenden Lager- und Gegenlagerflächen bestimmtes radiales Spiel zwischen dem Spiegelarm und dem Sockelteil aufweist.

EP 0 527 455 A1 beschreibt eine Außenspiegelhalterung für Nutzfahrzeuge, bei der ein Spiegelhaltearm gegenüber einem Haltebock sowohl reib- als auch formschlüssig gehalten ist. Sowohl der Reibschluss als auch eine mit dem Formschluss wirkende elastische Rastverbindung sind bei Einwirkung eines ausreichend hohen Belastungsmoments auf den Spiegelarm überwindbar, um eine Ausweichbewegung des Spiegelarms zu erlauben.

US 2008/0310041 A1 beschreibt eine weitere Außenspiegelhalterung, bei der ein Spiegelhaltearm reib- und formschlüssig gegenüber einem Haltebock mittels zweier haltebockseitiger konisch/spitzer Passkörper, deren Spitzen aufeinander zu weisen und in konische Gegenvertiefungen seitens des Haltearms eingreifen, drehbar gelagert ist. Der Anpressdruck zwischen den Passkörpern und den zugehörigen Gegenvertiefungen und damit die Gängigkeit der Lagerung kann über eine Spannschraube eingestellt werden, welche koaxial zur Drehachse verläuft bzw. diese definiert.

EP 0 139 509 A2, von der die vorliegende Erfindung ausgeht, beschreibt eine Außenspiegelhalterung, bei der ebenfalls ein Spiegelhaltearm gegenüber einem Haltebock drehbar gehalten ist. Eine elastische Rastung ist bei Einwirkung eines ausreichend hohen Belastungsmoments auf den Spiegelarm überwindbar, um eine Ausweichbewegung des Spiegelarms zu erlauben. Zur Zentrierung einer Schwenkachse des Spiegelarms weist diese eine aufgesetzte, konische und geschlitze Hülse auf, welche unter radialer Verformung nach innen (im Sinne einer Durchmesserverringerung) gegen eine Gegenkonusfläche drückbar ist.

Der vorliegenden Erfindung liegt die Aufgabe zu Grunde, eine Gelenkvorrichtung mit einem ersten Gelenkarm und einem über ein Drehgelenk mit dem ersten Gelenkarm verbundenen zweiten Gelenkarm zu schaffen, bei der das radiale Spiel zwischen dem ersten Gelenkarm und dem zweiten Gelenkarm verringert oder vermieden ist.

Gemäß einem ersten Aspekt der Erfindung wird diese Aufgabe gelöst durch eine Gelenkvorrichtung mit den Merkmalen des Anspruchs 1. Vorteilhafte Weiterbildungen sind in den davon abhängigen Ansprüchen beschrieben. Gemäß einem zweiten Aspekt der Erfindung wird diese Aufgabe gelöst durch eine Spiegelhalterung, die eine Gelenkvorrichtung gemäß dem ersten Aspekt umfasst. Gemäß einem dritten Aspekt der Erfindung wird diese Aufgabe gelöst durch einen Spiegel mit einer Spiegelhalterung, die eine Gelenkvorrichtung gemäß dem ersten Aspekt umfasst.

Gemäß dem ersten Aspekt und wie beansprucht wird eine Gelenkvorrichtung bereitgestellt, die folgendes umfasst: einen ersten Gelenkarm, der einen ersten und einen zweiten Lagerabschnitt und einen Verriegelungsabschnitt aufweist, einen zweiten Gelenkarm mit einem Endabschnitt, der eine Lagerbuchse aufweist, wobei die Lagerbuchse zwischen dem ersten und zweiten Lagerabschnitt angeordnet ist und einen mit dem ersten Lagerabschnitt zusammenwirkenden, ersten Gegenlagerabschnitt und einen mit dem zweiten Lagerabschnitt zusammenwirkenden, zweiten Gegenlagerabschnitt aufweist. Der zweite Gelenkarm ist in axialer Richtung gegen den ersten Gelenkarm mittels eines Federelements vorgespannt und um eine Gelenkachse verschwenkbar. Ein Riegelbolzen mit einem proximalen und einem distalen Endabschnitt dienst zum schwenkbaren Verbinden der beiden Gelenkarme, wobei der Riegelbolzen den ersten Lagerabschnitt, die Lagerbuchse und den zweiten Lagerabschnitt mit einem Bolzenschaft durchsetzt und in dem mindestens einen Verriegelungsabschnitt zumindest axial fixiert ist. Ein Zentrierelement weist eine von dem Bolzenschaft durchsetzbare Öffnung und eine die Öffnung umringende Anlagefläche auf zum Abstützen eines Endes des Federelements.

Hierbei weist das Zentrierelement auf: eine periphere Außenoberfläche, welche unter axialer Krafteinwirkung durch das Federelement radial aufspreizbar ist bzw. die zum Aufspreizen erforderlichen elastischen Eigenschaften aufweist, so dass das Zentrierelement und damit der Riegelbolzen in Bezug zu dem zweiten Lagerabschnitt oder dem zweiten Gegenlagerabschnitt zentriert, insbesondere radial gelagert, ist.

Der Riegelbolzen durchsetzt den ersten Lagerabschnitt, die Lagerbuchse und den zweiten Lagerabschnitt und ist in dem Verriegelungsabschnitt zumindest axial fixiert. Dadurch dass der erste und der zweite Lagerabschnitt zumindest um die axiale Länge der dazwischen angeordneten Lagerbuchse in der axialen Richtung beabstandet sind, ist das Drehgelenk konstruktionsbedingt ein Zweipunkt-Radiallager, bei dem der erste Gelenkarm über zwei in axialer Richtung zueinander versetzte, zum einen durch die ersten Lager- und Gegenlagerflächen und zum anderen durch die zweiten Lager- und Gegenlagerabschnitte definierten Axialabschnitte in Bezug zu dem zweiten Gelenkarm schwenkbar radial gelagert ist. Durch diese Zweipunkt-Radiallagerung ist das radiale Spiel des Spiegelarms gegenüber dem Sockelteil verringert. Die Verringerung des radialen Spiels ist umso größer, umso größer der axiale Abstand zwischen einerseits den zusammenwirkenden ersten Lager- und Gegenlagerabschnitten und andererseits den zusammenwirkenden zweiten Lager- und Gegenlagerabschnitten ist. Ein weiterer Vorteil ergibt sich, weil nur ein Riegelbolzen vorgesehen ist, der den ersten Lagerabschnitt, die Lagerbuchse und den zweiten Lagerabschnitt durchsetzt und axial fixiert ist. Die Anordnung mit nur einem Riegelbolzen ist, im Gegensatz zu bekannten Anordnungen mit zwei Riegelbolzen, einfacher und schneller zu montieren.

Die im Drehgelenk ausgebildete Zweipunkt-Lagerung ermöglicht, dass die Gelenkvorrichtung eine hohe Steifigkeit und günstige Vibrationseigenschaften aufweist. Mit Vibrationen sind hier die im Fahrbetrieb eines Fahrzeugs entstehende Vibrationen gemeint, etwa hinsichtlich ihrer Frequenz von der Motordrehzahl abhängige Vibrationen oder vom Rollkontakt der Räder mit der Fahrbahn herrührende Vibrationen. Durch die Zweipunkt-Lagerung ist die Gelenkvorrichtung stabil und steif gegenüber derartigen Vibrationen.

Die Gelenkvorrichtung kann zur schwenkbaren Befestigung eines Spiegels an einem Fahrzeug verwendet werden. In dieser Anwendung ermöglicht die in der Gelenkvorrichtung erzielbare hohe Steifigkeit, Stabilität und Spielfreiheit auch, mit demjenigen Gelenkarm, der an dem am Fahrzeug befestigten Gelenkarm angelenkt ist, eine weite Ausladung, d.h. eine große Länge des angelenkten Gelenkarms und einen großen Abstand des am distalen Abschnitt des angelenkten Gelenkarms getragenen Spiegels von der Fahrzeugaußenwand zu erzielen. Die erzielbare große Ausladung macht die Gelenkvorrichtung besonders geeignet für Verwendungen an Lastkraftwagen (LKW), bei denen häufig die Fahrerkabine schmaler als ein rückwärtiger Aufbau ist und die hohe Ausladung, bei Montage der Gelenkvorrichtung seitlich an der Fahrerkabine, es ermöglicht, diesen Breitenunterschied zu überbrücken und über den Spiegel an dem rückwärtigen Aufbau entgegen der Fahrtrichtung (nach hinten) vorbei zu blicken.

Die hohe Steifigkeit, Stabilität und Spielfreiheit der Gelenkvorrichtung ermöglicht auch, dass die Gelenkvorrichtung zum Tragen von schweren Spiegeln bzw. schweren Spiegelsystemen mit großen Spiegelflächen und/oder zusätzlichen im Spiegelsystem integrierten Elementen, wie etwa Leuchten, Blinkleuchten, Spiegelverstelleinrichtungen, Zusatzspiegel oder Antennen, verwendet werden kann.

Wesentliche Bauteile der Gelenkvorrichtung, einschließlich der erste und zweite Gelenkarm und der Riegelbolzen, können aus Kunststoff hergestellt werden. Dies und die Vermeidung von typischerweise aus Metall hergestellten Schrauben ermöglichen eine hohe Korrosionsbeständigkeit.

Der Riegelbolzen kann einen proximalen Endabschnitt, einen distalen Endabschnitt, einen am proximalen Endabschnitt angeordneten Bolzenkopf und einen sich davon in Richtung zum distalen Endabschnitt erstreckenden Bolzenschaft aufweisen. Ferner kann der Riegelbolzen eine am Übergang vom Bolzenkopf zum Bolzenschaft ausgebildete Ringschulter aufweisen. Diese Ringschulter kann vorzugsweise konusförmig ausgebildet sein. Der Bolzenkopf und die konische Ringschulter können für zusätzliche Zentrierzwecke bzw. zur Zentrierung an einer zusätzlichen axialen Position genutzt werden.

Der Bolzenschaft kann konisch ausgebildet ist und sich in Richtung zum distalen Endabschnitt verjüngen. Alternativ oder zusätzlich dazu kann der Bolzenkopf konisch ausgebildet sein und sich in Richtung zum distalen Endabschnitt verjüngen. Insbesondere kann der Bolzenkopf einen konischen ersten Bolzenkopfschnitt und einen distal bezüglich des ersten Bolzenkopfschnitts angeordneten, konischen zweiten Bolzenkopfschnitt aufweisen, wobei der erste und der zweite Bolzenkopfschnitt sich in Richtung zum distalen Endabschnitt verjüngen. Die konischen Ausgestaltungen des Bolzenschafts und/oder des Bolzenkopfs können, wenn in dem ersten und/oder zweiten Lagerabschnitt bzw. in dem ersten und/oder zweiten Endabschnitt der Lagerbuchse axial abschnittsweise entsprechende komplementäre Anlageflächen bzw. Lagerbunde ausgebildet sind, eine stabilere radiale Zentrierung der Lagerabschnitte bzw. der Lagerbuchse bewirken und deren radiales Spiel verringern oder eliminieren.

Der Riegelbolzen kann innen hohl ausgeführt sein. Dabei kann in dem Hohlraum zumindest abschnittweise ein elektrisches Kabel, etwa zur elektrischen Versorgung und/oder Ansteuerung von durch den angelenkten Gelenkarm getragenen zusätzlichen Komponenten sein. Alternativ kann der Riegelbolzen massiv ausgeführt sein. In massiver Ausführung verleiht der Riegelbolzen der Gelenkvorrichtung zusätzliche Stabilität.

Der erste Lagerabschnitt kann einen ersten Lagerbund aufweisen, der mit mindestens einem ersten Riegelbolzen-Mantelflächenabschnitt zusammenwirkt. Der erste Riegelbolzen-Mantelflächenabschnitt kann im Bereich des distalen Endabschnitts des Riegelbolzens angeordnet sein. So kann der Riegelbolzen im Bereich dieses ersten Riegelbolzen-Mantelflächenabschnitts bezüglich des ersten Lagerbunds zentriert, insbesondere radial gelagert, sein. Die Zentrierung und ggf. radiale Lagerung des Riegelbolzens im Bereich des ersten Riegelbolzen-Mantelflächenabschnitts kann das radiale Spiel zwischen dem Riegelbolzen und dem ersten Lagerabschnitt verringern oder im Wesentlichen eliminieren.

Der zweite Lagerabschnitt kann einen zweiten Lagerbund aufweisen, der mit mindestens einem zweiten Riegelbolzen-Mantelflächenabschnitt zusammenwirkt. Der zweite Riegelbolzen-Mantelflächenabschnitt kann im Bereich des proximalen Endabschnitt des Riegelbolzens, insbesondere am Bolzenkopf und/oder in axialer Nähe zum Bolzenkopf am Bolzenschaft des Riegelbolzens, angeordnet sein. So kann der Riegelbolzen im Bereich dieses zweiten Riegelbolzen-Mantelflächenabschnitts bezüglich des zweiten Lagerbunds zentriert, insbesondere radial gelagert, sein. Die Zentrierung und ggf. radiale Lagerung des Riegelbolzens im Bereich des zweiten Riegelbolzen-Mantelflächenabschnitts kann das radiale Spiel zwischen dem Riegelbolzen und dem ersten Lagerabschnitt verringern oder im Wesentlichen eliminieren.

Der erste Gegenlagerabschnitt kann einen dritten Lagerbund aufweisen, der mit mindestens einem dritten Riegelbolzen-Mantelflächenabschnitt zusammenwirkt. Der dritte Riegelbolzen-Mantelflächenabschnitt kann axial zwischen dem ersten und zweiten Lagerabschnitt, insbesondere im Bereich des distalen Endabschnitts des Riegelbolzens, etwa in einem distalen Teilabschnitt des Bolzenschafts, angeordnet sein. So kann der Riegelbolzen im Bereich dieses dritten Riegelbolzen-Mantelflächenabschnitts bezüglich des dritten Lagerbunds zentriert, insbesondere radial gelagert, sein. Die Zentrierung und ggf. radiale Lagerung des Riegelbolzens im Bereich des dritten Riegelbolzen-Mantelflächenabschnitts kann das radiale Spiel zwischen dem Riegelbolzen und dem ersten Endabschnitt der Lagerbuchse verringern oder im Wesentlichen eliminieren.

Der zweite Gegenlagerabschnitt kann einen vierten Lagerbund aufweisen, der mit mindestens einen vierten Riegelbolzen-Mantelflächenabschnitt zusammenwirkt. Der vierte Riegelbolzen-Mantelflächenabschnitt kann axial zwischen dem ersten und zweiten Lagerabschnitt, insbesondere im Bereich des proximalen Endabschnitts des Riegelbolzens, etwa in einem distalen Abschnitt des Bolzenkopfs und/oder in axialer Nähe zum Bolzenkopf am Bolzenschaft, angeordnet sein. So kann der Riegelbolzen im Bereich dieses vierten Riegelbolzen-Mantelflächenabschnitts bezüglich des vierten Lagerbunds zentriert, insbesondere radial gelagert, sein. Die Zentrierung und ggf. radiale Lagerung des Riegelbolzens im Bereich des vierten Riegelbolzen-Mantelflächenabschnitts kann das radiale Spiel zwischen dem Riegelbolzen und dem zweiten Endabschnitt der Lagerbuchse verringern oder im Wesentlichen eliminieren.

Ein Ausgleich von Maßtoleranzen zwischen dem ersten und/oder zweiten Gelenkarm und dem Riegelbolzen kann erzielt werden, wenn der Riegelbolzen eine Auflageschicht aufweist, die zumindest die Außenoberflächen des Bolzenkopfs und des Bolzenschafts überdeckt. Dabei kann die Auflageschicht als Gleitschicht, beispielsweise aus Teflon, ausgebildet sein. Die als Gleitschicht ausgebildete Auflageschicht bewirkt, dass die Reibung zwischen dem Riegelbolzen und den diesen zentrierenden, ggf. radial lagernden Lagerbünden verringert wird. Wenn die Auflageschicht überdies eine Weichheit bzw. Elastizität aufweist, die größer als die Weichheit bzw. Elastizität der von der Auflageschicht bedeckten Abschnitte des Riegelbolzens ist, kann die Auflageschicht in den Bereichen des ersten, zweiten, dritten und/oder vierten Riegelbolzen-Mantelflächenabschnitts, zumindest bereichsweise, zusammengedrückt sein und so Maßtoleranzen ausgleichen.

Die Verbindung zwischen dem Riegelbolzen und dem Verriegelungsabschnitt kann als Bajonettverbindung, als Quick-Lock-Verbindung, als Schnappverbindung und/oder als Splintverbindung ausgebildet sein. Dabei kann die Verbindung zwischen dem Riegelbolzen und dem Verriegelungsabschnitt im ersten Lagerabschnitt und/oder im zweiten Lagerabschnitt des ersten Gelenkarms angeordnet sein.

Wenn ein Verriegelungsabschnitt im oder beim ersten Lagerabschnitt angeordnet ist, kann der distale Endabschnitt des Riegelbolzens über eine erste Bajonettverbindung in oder an dem ersten Lagerabschnitt verriegelt sein. Alternativ dazu kann der distale Endabschnitt des Riegelbolzens mittels einer Schnappverbindung, einer Splintverbindung, insbesondere mittels eines Splints, oder einer Quick-Lock-Verbindung, insbesondere mittels einer Quick-Lock-Ringscheibe, in oder an dem ersten Lagerabschnitt verriegelt sein. Diese Verriegelung kann gegenüber einer axialen Verschiebung des Riegelbolzens in Richtung zu seinem proximalen Endabschnitt wirken. Durch diese Verriegelung an seinem distalen Endabschnitt ist der Riegelbolzen in der Gelenkvorrichtung gesichert und nicht verlierbar.

Wenn ein alternativer oder zusätzlicher Verriegelungsabschnitt im oder beim zweiten Lagerabschnitt angeordnet ist, kann der proximale Endabschnitt, insbesondere der Bolzenkopf, des Riegelbolzens über eine zweite Bajonettverbindung in oder an dem zweiten Lagerabschnitt verriegelt sein. Alternativ dazu kann der Bolzenkopf mittels einer Schnappverbindung, einer Splintverbindung, insbesondere mittels eines Splints, oder einer Quick-Lock-Verbindung, insbesondere mittels einer Quick-Lock-Ringscheibe, in oder an dem zweiten Lagerabschnitt verriegelt sein. Auch die Verriegelung am proximalen Endabschnitt kann gegenüber einer axialen Verschiebung des Riegelbolzens in Richtung zu seinem proximalen Endabschnitt wirken und den Riegelbolzen in der Gelenkvorrichtung sichern bzw. nicht verlierbar halten.

Der zweite Gelenkarm kann in axialer Richtung gegen den ersten Gelenkarm, insbesondere mittels eines Federelements, vorgespannt sein. Zur Realisierung dieser Vorspannung kann die Gelenkvorrichtung ein Federelement mit einem ersten und einem zweiten Ende umfassen. Dabei kann sich das Federelement mit seinem ersten Ende am zweiten Gelenkarm, insbesondere im Bereich des ersten Gegenlagerabschnitts, unmittelbar oder mittelbar abstützen. Auch kann sich das Federelement mit seinem zweiten Ende an einer am Riegelbolzen ausgebildeten Abstützfläche mittelbar oder unmittelbar abstützen. Die Abstützfläche kann im proximalen Endabschnitt des Riegelbolzens, etwa am Bolzenkopf oder am Bolzenschaft in der Nähe zum Bolzenkopf oder an der Ringschulter am Übergang zwischen dem Bolzenkopf und dem Bolzenschaft, ausgebildet sein. Das Federelement kann von Riegelbolzen, insbesondere von dem Bolzenschaft, durchsetzt sein. Im Fall mittelbarer Abstützung des ersten bzw. zweiten Endes kann zwischen dem jeweiligen Ende des Federelements und der damit zusammenwirkenden Abstützfläche ein, beispielsweise aus Teflon hergestelltes, Gleitelement zwischengelegt sein. Das Federelement kann als eine Spiralfeder, als eine Tellerfeder oder als eine Vielzahl (Stapel) von Tellerfedern ausgebildet sein. Die Vorspannung verringert oder eliminiert ein etwaiges axiales Spiel zwischen dem ersten und dem zweiten Gelenkarm.

Der erste Lagerabschnitt kann eine konische Innen- oder Außenoberfläche und der erste Endabschnitt der Lagerbuchse eine dazu komplementäre, konische Außen- oder Innenoberfläche aufweisen. Diese konischen Flächen können so zusammenwirken, dass der erste Endabschnitt durch die Vorspannung an bzw. in dem ersten Lagerabschnitt radial und axial im Wesentlichen spielfrei gelagert ist. Eine derartige Wirkung wird durch die mögliche Vorspannung noch verstärkt. Zu diesem Zweck kann in einem axialen Querschnitt der erste Lagerabschnitt auch die Form eines Bechers, insbesondere eines koaxialen Bechers, und der erste Endabschnitt der Lagerbuchse die Form eines dazu komplementären koaxialen Bechers aufweisen. Gemäß der Erfindung umfasst die Gelenkvorrichtung ferner ein Zentrierelement das eine von dem Bolzenschaft durchsetzte Öffnung und eine periphere Außenoberfläche aufweist, die als Zentrierfläche in Bezug zu dem vierten Lagerbund wirken kann. So kann der Riegelbolzen in Bezug zu dem zweiten Gegenlagerabschnitt zentriert, insbesondere radial gelagert, sein. Alternativ dazu kann die Gelenkvorrichtung ein Zentrierelement umfassen, das eine von dem Bolzenschaft durchsetzte Öffnung und eine periphere Außenoberfläche aufweist, die als Zentrierfläche in Bezug zu dem zweiten Lagerbund wirken kann. So kann der Riegelbolzen in Bezug zu dem zweiten Lagerabschnitt zentriert, insbesondere radial gelagert, sein. Alternativ oder zusätzlich zu der Auflageschicht kann das Zentrierelement bewirken, dass Maßtoleranzen zwischen dem ersten und/oder zweiten Gelenkarm und dem Riegelbolzen ausgeglichen werden.

Wie bereits erwähnt, kann an dem Riegelbolzen am Übergang vom Bolzenschaft zum Bolzenkopf eine konische Ringschulter ausgebildet sein. Dabei kann ein Zentrierelement, das wie oben beschrieben bereitgestellt ist, zwischen dem zweiten Ende des Federelements und der konischen Ringschulter angeordnet sein. Ferner kann das Zentrierelement so ausgebildet sein, dass es unter der Wirkung der auf es axial in Richtung zu dem Bolzenkopf wirkenden elastischen Kraft des Federelements an der konischen Ringschulter radial aufspreizen kann und dabei seine periphere Außenoberfläche an dem zweiten Lagerbund und/oder an dem vierten Lagerbund angedrückt sein kann.

Das Zentrierelement kann eine der folgenden Ausgestaltungen aufweisen:
(A) Die periphere Außenoberfläche des Zentrierelements kann eine in Umfangsrichtung umlaufende Fläche sein. Dabei kann das Zentrierelement ein Ring, wie etwa ein O-Ring oder eine Ringscheibe sein.
(B) Das Zentrierelement kann einen sich in radialer Richtung erstreckenden Schlitz aufweisen, der an seinem radial inneren Ende in die Öffnung mündet und an seinem radial äußeren Ende offen ist. Die periphere Außenoberfläche kann eine in Umfangsrichtung mit Ausnahme des aufgrund des Schlitzes offenen Abschnitts umlaufende Fläche sein.
(C) Die periphere Außenoberfläche des Zentrierelements kann mindestens zwei, vorzugsweise drei, in Umfangsrichtung versetzt, insbesondere gleichmäßig verteilt, angeordnete Mantelflächensegmente umfasst. Diese Mantelflächensegmente können radial äußere Zylinderwandsegmente sein.

Das Zentrierelement kann an seinem der konischen Ringschulter zugewandten Ende folgendes umfassen:
(i) Mindestens eine Fase oder ein in einem Radialschnitt als Keil geformtes Profil, die bzw. das in Umfangsrichtung durchgehend oder unterbrochen um die Öffnung herum ausgebildet ist, wobei die Fase oder das Profil in radialer Richtung in Bezug zu der Schwenkachse einen Neigungswinkel aufweisen kann. Der Neigungswinkel kann insbesondere einem Konuswinkel der konischen Ringschulter entsprechen.
(ii) Mindestens zwei, vorzugsweise drei, in Umfangsrichtung beabstandet, vorzugsweise gleichmäßig verteilt angeordnete, kreissegmentförmige Fasen oder Endflächen, die in radialer Richtung in Bezug zu der Schwenkachse einen Neigungswinkel aufweisen können. Der Neigungswinkel kann insbesondere einem Konuswinkel der konischen Ringschulter entsprechen.
(iii) Eine Vielzahl von Noppen bzw. Endflächen, die radial und/oder in Umfangsrichtung verteilt angeordnet sind. Dabei können die Endflächen mit unterschiedlichen Radien bzw. Abständen zu einer Achse des Zentrierelements in axialer Richtung versetzt zueinander angeordnet sein. Der axiale Versatz kann für Endflächen mit kleineren Radien geringer und für Endflächen mit größeren Radien größer gewählt sein, und zwar insbesondere entsprechend dem Konuswinkel der konusförmigen Ringschulter des Riegelbolzens, der dazu vorgesehen ist, mit den Endflächen des Zentrierelements zusammenzuwirken. Dabei kann zumindest ein Teil der Endflächen axial zentriert und kreisförmig oder kreissegmentförmig ausgebildet sein.

In den Ausgestaltungen (A), (B) und/oder (C) sowie in den Ausgestaltungen (i), (ii) und/oder (iii) kann das Zentrierelement einteilig und/oder aus einem elastischen Material hergestellt sein.

Der erste und der zweite Gelenkarm können etwa aus Kunststoff oder Druckguss hergestellt sein. Der Riegelbolzen kann ebenfalls aus Kunststoff, insbesondere mittels eines Druckgussverfahrens, hergestellt sein. Das Zentrierelement kann aus einem elastischen Material, beispielsweise aus Gummi, aus Kunststoff, hergestellt und z.B. mittels eines Druckgussverfahrens geformt sein. Wenn die vorgenannten Bauteile der Gelenkvorrichtung, nämlich der erste und zweite Gelenkarm, der Riegelbolzen und das Zentrierelement aus Kunststoff hergestellt sind, ist die Gelenkvorrichtung in der Herstellung kostengünstig und weitgehend korrosionsgeschützt.

Alternativ zur Herstellung aus Kunststoff kann der Riegelbolzen aus einem Metall, einer Metalllegierung, wie etwa Messing, oder einem anderen metallischem Material hergestellt sein. Ein derartiger Riegelbolzen verleiht der Gelenkvorrichtung besondere Stabilität und Verwindungssteifigkeit. Auch das Zentrierelement kann aus einem Metall, einer Metalllegierung, wie etwa Messing, oder einem anderen metallischem Material hergestellt sein.

Die Gelenkvorrichtung kann als ein Friktionsgelenk ausgebildet sein. In der Ausbildung als Friktionsgelenk kann der erste Lagerabschnitt eine bezüglich der Schwenkachse zumindest abschnittweise konisch, kugelförmig, becherförmig, im axialen Querschnittsprofil in Form eines im Wesentlichen gleichmäßigen und bezüglich der Schwenkachse im Wesentlichen symmetrischen Trapezes, als mindestens drei zumindest abschnittsweise radial verlaufende, in Umfangsrichtung versetzt, insbesondere gleichmäßig verteilt, angeordnete Stege, wellenförmig oder im Wesentlichen eben und im Wesentlichen senkrecht zur Schwenkachse ausgebildete erste Friktionsfläche aufweisen. Der erste Gegenlagerabschnitt der Lagerbuchse kann eine zumindest abschnittweise zu der ersten Friktionsfläche komplementäre zweite Friktionsfläche aufweisen, die mit der ersten Friktionsfläche zusammenwirkt. Die Stärke der bei einer relativen Verschwenkung der ersten und zweiten Gelenkarme wirkende Friktion (Reibung) wird durch die Stärke der durch das Federelement bewirkten Vorspannung und die Ausgestaltung der Oberfläche, einschließlich Schleifen, Polieren oder Aufbringen einer Gleitschicht oder einer Bremsschicht, der Friktionsflächen bestimmt.

Alternativ oder zusätzlich dazu kann die Gelenkvorrichtung als Rastgelenk ausgebildet sein. In einer ersten Variante der Ausgestaltung als Rastgelenk kann der erste Lagerabschnitt eine zumindest abschnittweise im Wesentlichen senkrecht zur Gelenkachse ausgebildete erste Rastfläche aufweisen, und der erste Gegenlagerabschnitt der Lagerbuchse kann eine zumindest abschnittweise im Wesentlichen senkrecht zur Gelenkachse ausgebildete zweite Rastfläche aufweisen. Die zweite Rastfläche kann zu der ersten Rastfläche komplementär sein und mit dieser zusammenwirken. In einer zweiten Variante der Ausgestaltung als Rastgelenk kann ein Mantelflächenabschnitt der Lagerbuchse eine erste Rastfläche aufweisen, und der erste Gelenkarm kann einen zwischen dem ersten und zweiten Lagerabschnitt ausgebildeten Flächenabschnitt aufweisen, der eine zweite Rastfläche aufweist. Die zweite Rastfläche kann zu der ersten Rastfläche komplementär sein und mit dieser zusammenwirken. Die Stärke der Wirkung der Rasterung bezüglich der relativen Verschwenkung zwischen dem ersten und dem zweiten Gelenkarm wird durch die Stärke der durch das Federelement bewirkten Vorspannung und die Ausgestaltung der Rastkulissen der Rastflächen, einschließlich etwa einer Rastentiefe und einem Neigungswinkel der Rasterung, bestimmt.

Gemäß einem zweiten Aspekt der Erfindung wird eine Spiegelhalterung zur Befestigung eines Spiegels an einem Fahrzeug bereitgestellt. Erfindungsgemäß umfasst die Spiegelhalterung eine Gelenkvorrichtung gemäß dem ersten Aspekt.

Gemäß einem dritten Aspekt der Erfindung wird eine Spiegelanordnung mit einem Spiegelkopf und einer Spiegelhalterung gemäß dem zweiten Aspekt bereitgestellt.

Bei einer Verwendung der Gelenkvorrichtung zur Befestigung eines Spiegels an einem Fahrzeug kann der erste Gelenkarm der an dem Fahrzeug befestigbare Gelenkarm sein, und der zweite Gelenkarm kann einen zu seinem, die Gelenkverbindung ausbildenden Endabschnitt entgegengesetzten Spiegeltrageabschnitt aufweisen, der den Spiegel trägt. Alternativ dazu kann der zweite Gelenkarm der an dem Fahrzeug befestigbare Gelenkarm sein, und der erste Gelenkarm kann einen Spiegeltrageabschnitt aufweisen, der an dem Ende, das zu dem die Gelenkverbindung ausbildenden Ende mit dem ersten und zweiten Lagerabschnitt entgegengesetzt ist, ausgebildet ist und den Spiegel trägt.

In beiden Fällen kann der Spiegel bezüglich des Spiegeltrageabschnitts verschwenkbar sein. Ferner kann die Gelenkvorrichtung in beiden Fällen so an einem Fahrzeug montiert werden, dass der erste Lagerabschnitt oberhalb des zweiten Lagerabschnitts oder alternativ dazu der zweite Lagerabschnitt oberhalb des ersten Lagerabschnitts angeordnet ist.

In beiden Fällen kann an dem den Spiegel tragenden Gelenkarm zwischen dem die Gelenkverbindung ausbildenden Ende und dem Spiegeltrageabschnitt ein Tragearmabschnitt, oder alternativ dazu zwei Tragearmabschnitte, die im Wesentlichen parallel zueinander verlaufen, ausgebildet sein. In der Ausgestaltung mit zwei Tragearmabschnitten kann zur Verbesserung der aerodynamischen Eigenschaften (z.B. Luftwiderstand) und/oder des Aussehens des den Spiegel tragenden Gelenkarms zwischen den beiden Tragearmabschnitten eine Winddurchlassöffnung ausgebildet sein.

### Ausführungsformen der Erfindung

Im Folgenden werden Ausführungsbeispiele einer Gelenkvorrichtung näher erläutert. Es zeigen:
Figur 1 eine Ansicht eines ersten Ausführungsbeispiels einer erfindungsgemäßen Gelenkvorrichtung, insbesondere eine Frontansicht für eine an einem an einem Fahrzeug befestigbare Gelenkvorrichtung,
Figur 2 eine Ansicht der Gelenkvorrichtung aus der Figur 1 in Blickrichtung in der Figur 1 von rechts auf die Gelenkvorrichtung,
Figur 3 eine Ansicht mit teilweiser Schnittdarstellung der Gelenkvorrichtung aus der Figur 1 in Blickrichtung der Figur 1, wobei der erste Gelenkarm und ein Bereich des zweiten Gelenkarms in einer die Gelenkachse enthaltenden Ebene geschnitten sind, Figur 4 eine Explosionsdarstellung der Gelenkvorrichtung aus der Figur 3
Figur 5 eine Ansicht mit teilweiser Schnittdarstellung, analog zu Figur 4, eines zweiten Ausführungsbeispiels einer Gelenkvorrichtung, und gemäß der Erfindung
Figur 6 eine Explosionsdarstellung der Gelenkvorrichtung aus der Figur 5,
Figur 7 mit den Figuren 7A, 7B, 7C und 7D Ansichten unterschiedlicher Ausgestaltungen eines in einer erfindungsgemäßen Gelenkvorrichtung einbaubaren Zentrierelements, und
Figur 8 eine Ansicht mit teilweiser Schnittdarstellung, analog zu Figur 4, eines dritten Ausführungsbeispiels eines Gelenkvorrichtung, und gemäß der Erfindung.

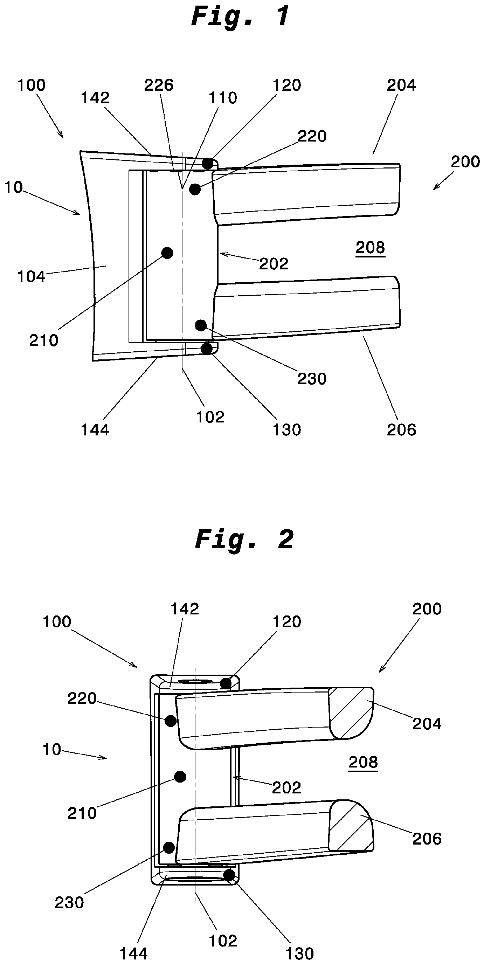

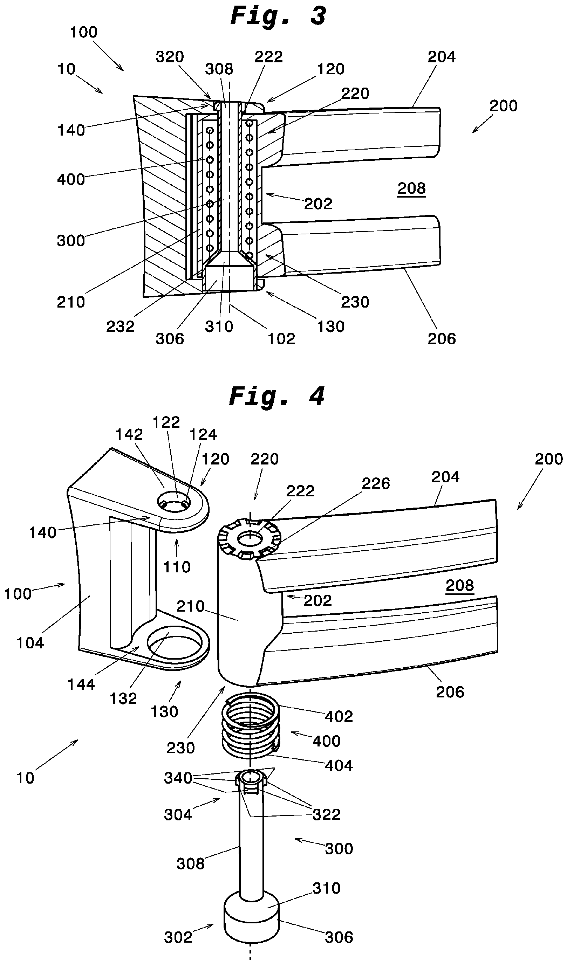

Das in den Figuren 1 bis 4 gezeigte erste Ausführungsbeispiel zeigt eine Gelenkvorrichtung 10, die zur schwenkbaren Befestigung eines Spiegels an einem Fahrzeug (nicht gezeigt) verwendet werden kann. Die Gelenkvorrichtung 10 umfasst einen ersten Gelenkarm 100, der an dem Fahrzeug befestigbar ist und der einen ersten und einen zweiten Lagerabschnitt 120, 130 und einen Verriegelungsabschnitt 140 aufweist, einen zweiten Gelenkarm 200, der einen Spiegel tragen kann und der einen mit dem ersten Gelenkarm 100 über ein Drehgelenk schwenkbar verbundenen Endabschnitt 202, der eine zwischen dem ersten und einen zweiten Lagerabschnitt 120, 130 angeordnete Lagerbuchse 210 mit einem ersten und zweiten Gegenlagerabschnitt 220, 230 aufweist, und einen Riegelbolzen 300 (siehe Figuren 3 und 4), der einen proximalen Endabschnitt 302 und einen distalen Endabschnitt 304 aufweist und zum schwenkbaren Verbinden der beiden Gelenkarme 100, 200 dient. Die Lagerabschnitte 120, 130 des ersten Gelenkarms 100 definieren zusammen eine Gelenkachse 102 des Drehgelenks. Die Gegenlagerabschnitte 220, 230 des zweiten Gelenkarms 200 angeordnet. Der erste Gegenlagerabschnitt 220 des zweiten Gelenkarms 200 wirkt mit dem ersten Lagerabschnitt 120 des ersten Gelenkarms 100 zusammen. Der zweite Gegenlagerabschnitt 230 des zweiten Gelenkarms 200 wirkt mit dem zweiten Lagerabschnitt 130 des ersten Gelenkarms 100 zusammen. Der Riegelbolzen 300 ist im Wesentlichen koaxial zu der Gelenkachse 102 angeordnet und durchsetzt den ersten Lagerabschnitt 120, die Lagerbuchse 210 mit dem ersten und zweiten Gegenlagerabschnitt 220, 230 und den zweiten Lagerabschnitt 130.

Der Riegelbolzen 300 umfasst einem an seinem proximalen Endabschnitt 302 ausgebildeten Bolzenkopf 306 mit erweitertem Durchmesser, einen sich von dem Bolzenkopf 306 in Richtung zu seinem distalen Endabschnitt 304 erstreckenden Bolzenschaft 308 und eine Ringschulter 310, die am Übergang vom Bolzenkopf 306 zum Bolzenschaft 308 ausgebildet ist. In den in den Figuren 1 bis 6 und 8 gezeigten Ausführungsbeispielen ist die Ringschulter 310 konisch ausgebildet und verjüngt sich in Richtung zum distalen Endabschnitt 304 aus Gründen, die weiter unten näher beschrieben sind.

In dem ersten Lagerabschnitt 120 ist ein erster Lagerbund 122 ausgebildet. Dieser erste Lagerbund 122 ist koaxial zur Gelenkachse 102 ausgebildet und wirkt zusammen mit mindestens einem ersten Riegelbolzen-Mantelflächenabschnitt 340, der im Bereich des distalen Endabschnitts 304 des Riegelbolzens 300 angeordnet ist. So ist der Riegelbolzen 300 im Bereich dieses ersten Riegelbolzen-Mantelflächenabschnitts 342 bezüglich des ersten Lagerbunds 122 zentriert und je nach Ausbildung des ersten Riegelbolzen-Mantelflächenabschnitts 340 radial gelagert. In dem zweiten Lagerabschnitt 130 ist ein zweiter Lagerbund 132 ausgebildet. Dieser zweite Lagerbund 132 ist koaxial zur Gelenkachse 102 ausgebildet und wirkt zusammen mit mindestens einem zweiten Riegelbolzen-Mantelflächenabschnitt 342, der im Bereich des proximalen Endabschnitts 302 des Riegelbolzens 300 angeordnet ist. So ist der Riegelbolzen 300 im Bereich dieses zweiten Riegelbolzen-Mantelflächenabschnitts 342 bezüglich des zweiten Lagerbunds 132 zentriert und je nach Ausbildung des zweiten Riegelbolzen-Mantelflächenabschnitts 342 radial gelagert.

In dem ersten Gegenlagerabschnitt 220 ist ein dritter Lagerbund 222 ausgebildet. Dieser dritte Lagerbund 222 wirkt zusammen mit mindestens einem dritten Riegelbolzen-Mantelflächenabschnitt 344, der axial zwischen dem ersten und zweiten Lagerabschnitt 120, 130 bzw. zwischen dem ersten und zweiten Riegelbolzen-Mantelflächenabschnitt 340, 342 im Bereich des distalen Endabschnitts 304 des Riegelbolzens 300 angeordnet ist. So sind der Riegelbolzen 300 und der dritte Lagerbund 222 im Bereich dieses dritten Riegelbolzen-Mantelflächenabschnitts 344 zueinander zentriert. Ferner ist in dem zweiten Gegenlagerabschnitt 230 ein vierter Lagerbund 232 ausgebildet. Dieser vierte Lagerbund 232 wirkt zusammen mit mindestens einem vierten Riegelbolzen-Mantelflächenabschnitt 344, der axial zwischen dem ersten und zweiten Lagerabschnitt 120, 130 bzw. zwischen dem ersten und zweiten Riegelbolzen-Mantelflächenabschnitt 340, 342 im Bereich des proximalen Endabschnitts 302 des Riegelbolzens 300 angeordnet ist. So sind der Riegelbolzen 300 und der vierte Lagerbund 232 im Bereich dieses vierten Riegelbolzen-Mantelflächenabschnitts 344 zueinander zentriert.

Genauer betrachtet, ist der Riegelbolzen 300 in seinem distalen Endabschnitt 304 (seinem ersten Riegelbolzen-Mantelflächenabschnitt 340) im ersten Lagerabschnitt 120 und in seinem proximalen Endabschnitt 302 (seinem zweiten Riegelbolzen-Mantelflächenabschnitt 342) im zweiten Lagerabschnitt 130 zentriert bzw. radial gelagert, und damit seine Achse an den beiden axial voneinander beabstandeten Abschnitten 340 und 342 koaxial zur Gelenkachse 102 festgelegt. Daher ist der erste Gegenlagerabschnitt 220 des zweiten Gelenkarms 200 über das Zusammenwirken des dritten Lagerbunds 222 mit dem dritten Riegelbolzen-Mantelflächenabschnitt 344 in Bezug zu der Gelenkachse 102 zentriert bzw. radial gelagert. Entsprechend ist auch der zweite Gegenlagerabschnitt 230 des zweiten Gelenkarms 200 über das Zusammenwirken des vierten Lagerbunds 232 mit dem vierten Riegelbolzen-Mantelflächenabschnitt 346 in Bezug zu der Gelenkachse 102 zentriert bzw. radial gelagert. Je größer der axiale Abstand zwischen dem ersten bzw. zweiten Riegelbolzen-Mantelflächenabschnitt 340 und 342 bzw. dem ersten bzw. zweiten Lagerbund 122, 132, desto stabiler ist bei jeweils gegebenem radialen Spiel die relative Fixierung des ersten Gelenkarms in Bezug zu der Gelenkachse 102. Entsprechend gilt, dass je größer der axiale Abstand zwischen dem dritten bzw. vierten Riegelbolzen-Mantelflächenabschnitt 344 und 346 bzw. dem dritten bzw. vierten Lagerbund 222, 232 ist, desto stabiler bei jeweils gegebenem radialen Spiel die relative Fixierung des zweiten Gelenkarms in Bezug zu der Gelenkachse 102 ist.

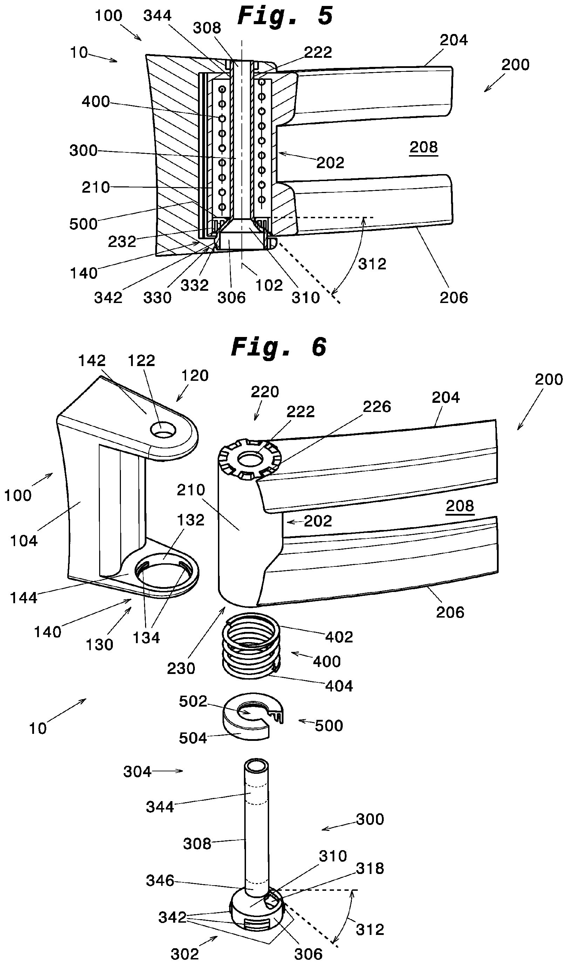

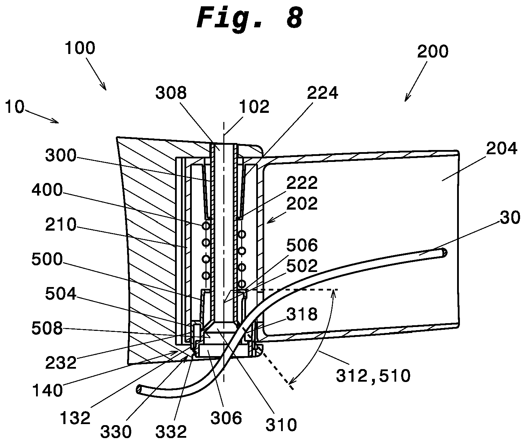

Der Riegelbolzen 300 ist in dem Verriegelungsabschnitt 140 des ersten Gelenkarms 100 mit dem ersten Gelenkarm 100 verbindbar, und dort im eingebauten Zustand mit dem ersten Gelenkarm 100 verriegelt. Die Verbindung bzw. Verriegelung zwischen dem Riegelbolzen 300 und dem Verriegelungsabschnitt 140 kann im ersten 120 und/oder im zweiten 130 Lagerabschnitt angeordnet sein. Dabei kann die Verbindung zwischen dem Riegelbolzen 300 und dem Verriegelungsabschnitt 140 jeweils als Bajonettverbindung, als Quick-Lock-Verbindung, als Schnappverbindung und/oder als Splintverbindung ausgebildet sein. In dem in den Figuren 1 bis 4 gezeigten ersten Ausführungsbeispiel ist der Verriegelungsabschnitt 140 im ersten Lagerabschnitt 120 angeordnet und als erste Bajonettverbindung 320 ausgebildet. In dem in den Figuren 5 und 6 gezeigten zweiten Ausführungsbeispiel und in dem in der Figur 8 gezeigten dritten Ausführungsbeispiel ist der Verriegelungsabschnitt 140 im zweiten Lagerabschnitt 130 angeordnet und als zweite Bajonettverbindung 330 ausgebildet.

Die Gelenkvorrichtung 10 umfasst ferner ein Federelement 400 (siehe Figuren 3 und 4). Dieses dient zum Vorspannen des zweiten Gelenkarms 200 axial in der Richtung vom zweiten Lagerabschnitt 130 zum ersten Lagerabschnitt 120 gegen den ersten Gelenkarm 100. Das Federelement 400 hat ein erstes und ein zweites Ende 402, 404 und ist hier als Spiralfeder ausgebildet, so dass es auf den Bolzenschaft 308 aufgeschoben werden kann und im aufgeschobenen Zustand vom Bolzenschaft 308 durchsetzt ist. Das Federelement 400 stützt sich mit seinem zweiten Ende 404 an dem mit dem ersten Gelenkarm 100 verriegelten Riegelbolzen 300, in den in den Figuren 1 bis 4 genauer an der am Übergang vom Bolzenschaft 308 zum Bolzenkopf 306 ausgebildeten Ringschulter 310 ab. Mit seinem ersten Ende 402 stützt sich das Federelement 400 an dem ersten Gegenlagerabschnitt 220 des zweiten Gelenkarms 200 ab und spannt den ersten Gegenlagerabschnitt 220 gegen den ersten Lagerabschnitt 120 vor. So wird das axiale Spiel des zweiten Gelenkarms 200 in Bezug zum ersten Gelenkarm 100 verringert bzw. im Wesentlichen eliminiert.

In den in den Figuren 1 bis 6 und 8 gezeigten ersten, zweiten und dritten Ausführungsbeispiel ist die Gelenkvorrichtung 10 als Rastgelenk ausgebildet. Dazu ist am ersten Lagerabschnitt 120 eine im Wesentlichen senkrecht zur Gelenkachse 102 angeordnete erste Rastfläche 110 (wie in Figur 4 angedeutet) und am ersten Gegenlagerabschnitt 220 eine im Wesentlichen senkrecht zur Gelenkachse 102 angeordnete zweite Rastfläche 226 ausgebildet (wie in Figur 4 zu sehen ist), die zu der ersten Rastfläche 110 komplementär ist und mit dieser zusammenwirkt. Die erste und zweite Rastfläche 110, 226 weisen jeweils in Umfangsrichtung um die Gelenkachse 102 verteilt angeordnete Rastnasen, die in Umfangsrichtung schräge Seitenflächen aufweisen, und Rastvertiefungen, die in Umfangsrichtung dazu komplementäre schräge Seitenflächen aufweisen. In der Figur 4 ist nur die der zweite Rastfläche 226 zu sehen und die erste Rastfläche 110 mittels des Bezugszeichens angedeutet. Aufgrund der zueinander komplementären Ausbildung und unter der durch das Federelement 400 bewirkten Vorspannung des ersten Gegenlagerabschnitts 220 gegen den ersten Lagerabschnitt 120 greifen die Rastnasen der zweiten Rastfläche 226 in die Rastvertiefungen der ersten Rastfläche 110 und die Rastnasen der ersten Rastfläche 110 in die Rastvertiefungen der zweiten Rastfläche 226 ein. Mit dieser Ausgestaltung als Rastgelenk kann der zweite Gelenkarm 200 in Bezug zu dem ersten Gelenkarm 100 um die Gelenkachse 102 verschwenkt werden, wobei während der Verschwenkbewegung die Rastnasen aus den komplementären Rastvertiefungen herausgehoben werden und die Lagerbuchse 210 des zweiten Gelenkarms 200 entgegen der Wirkrichtung der von dem Federelement 400 bewirkten Vorspannung (d.h. axial in Richtung vom ersten Lagerabschnitt 120 zum zweiten Lagerabschnitt 130) entsprechend der axialen Höhe der Rastnasen bzw. Tiefe der Rastvertiefungen vorübergehend versetzt wird, bis am Ende der Verschwenkbewegung die Rastnasen an in Umfangsrichtung versetzt angeordneten Rastpositionen in versetzt angeordneten Rastvertiefungen eingreifen (einrasten) und die Lagerbuchse 210 unter der von dem Federelement 400 bewirkten Vorspannung in der Wirkrichtung der Vorspannung (d.h. axial in Richtung vom zweiten Lagerabschnitt 130 zum ersten Lagerabschnitt 120) wieder in ihre ursprüngliche axiale Position gedrückt wird.

Wie bereits erwähnt, ist in dem in den Figuren 1 bis 4 gezeigten ersten Ausführungsbeispiel der Riegelbolzen 300 in dem im ersten Lagerabschnitt 120 des ersten Gelenkarms 100 angeordneten Verriegelungsabschnitt 140 verriegelt, und zwar über dort wirkende erste Bajonettverbindung 320. Die erste Bajonettverbindung 320 umfasst bzw. wird hergestellt durch mehrere (in den Figuren 3 und 4: drei) am distalen Endabschnitt 304 des Riegelbolzens 300 ausgebildete, jeweils radial nach außen ragende und in Umfangsrichtung verteilt angeordnete erste Bajonetterweiterungen 332 und damit (wie weiter unten näher beschrieben) zusammenwirkende, im ersten Lagerabschnitt 120 (genauer: im ersten Lagerbund 122) ausgebildete, jeweils radial nach innen ragende und in Umfangsrichtung verteilt angeordnete, mehrere (in den Figuren 3 und 4: drei) erste Bajonettbundsegmente 126.

Mit Verweis auf die Figur 4 wird die aus dem ersten Gelenkarm 100, dem zweiten Gelenkarm 200, dem Riegelbolzen 300 und dem Federelement 400 bestehende Gelenkvorrichtung 10 des ersten Ausführungsbeispiels wie folgt zusammengebaut. Zunächst wird das hier als Spiralfeder ausgebildete Federelement 400 über den Bolzenschaft 308 des Riegelbolzens 300 geschoben bis das zweite Ende 404 des Federelements 400 in axialer Richtung an der Ringschulter 310 am Bolzenkopf 306 anschlägt. Dann wird die Lagerbuchse 210 des zweiten Gelenkarms 200 zwischen den ersten und zweiten Lagerabschnitt 120, 130 des ersten Gelenkarms 100 geführt und die Achse der Lagerbuchse 210 im Wesentlichen koaxial zu der Gelenkachse 102 des ersten Gelenkarms 100 ausgerichtet. Dann wird der Riegelbolzen 300 mit aufgesetztem Federelement 400 und mit seinem distalen Endabschnitt 304 voran durch den zweiten Lagerabschnitt 130 des ersten Gelenkarms 100, den zweiten Gegenlagerabschnitt 230 und den ersten Gegenlagerabschnitt 220 der Lagerbuchse 210 des zweiten Gelenkarms 200 hindurch bis in den Bereich des ersten Lagerabschnitts 120 des ersten Gelenkarms 100 eingeführt. Beim Einführen des distalen Endabschnitts 304 des Riegelbolzens 300 in den ersten Lagerbund 122 wird der Riegelbolzen 300 so um seine Achse verdreht, dass die ersten Bajonetterweiterungen 322 an seinem distalen Endabschnitt 304 zwischen den ersten Bajonettbundsegmenten 126 des ersten Lagerbunds 122 in axialer Richtung hindurch und an diesen vorbei gleiten können. Dann wird der Riegelbolzen 300 weiter geschoben bis die ersten Bajonetterweiterungen 322 an den ersten Bajonettbundsegmenten 126 vorbei geglitten sind. Sodann wird der Riegelbolzen 300 um seine Achse verdreht, so dass die ersten Bajonetterweiterungen 332 axial hinter die ersten Bajonettbundsegmente 126 kommen und mit diesen in Eingriff kommen, wodurch die Verriegelung des Riegelbolzens 300 mit dem ersten Gelenkarm 100 zustande kommt. Durch entsprechende Hinterschneidungen der Bajonetterweiterungen 332 und der ersten Bajonettbundsegmente 126 kann dabei auch ein Hintergriff erzielt werden. Nach Zustandekommen der Verriegelung kann der Riegelbolzen 300 nicht mehr in der zur Einführungsrichtung entgegengesetzten Richtung zurückgezogen werden oder herausfallen, und ist hinsichtlich seiner axialen Position festgelegt.

Die ersten Bajonetterweiterungen 332 weisen Mantelaußenflächen auf, die an der Innenoberfläche des ersten Lagerbundes 122 anliegen und auf diese Weise zusammen den ersten Riegelbolzen-Mantelabschnitt 340 bilden, über den Riegelbolzen 300 (genauer: dessen distaler Endabschnitt 304) bezüglich des ersten Lagerbunds 122 zentriert ist.

Der Riegelbolzen 300 kann prinzipiell mit dem ersten Gelenkarm 100 oder mit dem zweiten Gelenkarm 200 zumindest in der axialen Richtung verriegelt bzw. festgelegt werden. In der in den Figuren 1 bis 4 und ebenso auch in der in den Figuren 5 und 6 gezeigten Ausführungsform ist der Riegelbolzen 300 mit dem ersten Gelenkarm 100 verriegelt. Die Verriegelung bewirkt, dass der Riegelbolzen 300, nachdem er wie oben beschrieben mit seinem distalen Endabschnitt 304 voran durch die Abschnitte 130 und 230 sowie 220 und 120 eingeführt worden ist, nach Aktivieren der Verriegelung nicht mehr in der umgekehrten Richtung zurückgezogen werden oder herausfallen kann und hinsichtlich seiner axialen Position festgelegt ist. Die axiale Verriegelung des Riegelbolzens 300 kann prinzipiell gemäß einer der folgenden Ausgestaltungen ausgebildet sein.

Das in den Figuren 5 und 6 gezeigte zweite Ausführungsbeispiel einer Gelenkvorrichtung 10, und gemäß der Erfindung, unterscheidet sich von dem in den Figuren 1 bis 4 gezeigten ersten Ausführungsbeispiel in folgenden Aspekten. Zum einen ist der Verriegelungsabschnitt 140 des ersten Gelenkarms 100 im Bereich von dessen zweitem Lagerabschnitt 130 (genauer: von dessen zweitem Lagerbund 132) angeordnet und wirkt über eine zweite Bajonettverbindung 330, die zwischen dem Bereich des proximalen Endabschnitts 302 (genauer: dem Bolzenkopf 306) und dem zweiten Lagerabschnitt 130 (genauer: dem zweiten Lagerbund 132) anstelle der in den Figuren 3 und 4 gezeigten ersten Bajonettverbindung 320, die zwischen dem distalen Endabschnitt 304 des Bolzenschafts 310 und dem ersten Lagerabschnitt 120 (genauer: dem ersten Lagerbund 122) wirkt. Zum anderen umfasst die Gelenkvorrichtung 10 gemäß dem zweiten Ausführungsbeispiel zusätzlich zu der des ersten Ausführungsbeispiels ein Zentrierelement 500, dessen Aufbau und Funktion weiter unten näher beschrieben wird.

Die zweite Bajonettverbindung 330 umfasst bzw. wird hergestellt durch mehrere (in den Figuren 5 und 6: drei) im Bereich des proximalen Endabschnitts 302 (genauer: am Bolzenkopf 306) des Riegelbolzens 300 ausgebildete, jeweils radial nach außen ragende und in Umfangsrichtung verteilt angeordnete zweite Bajonetterweiterungen 332 und damit (wie weiter unten näher beschrieben) zusammenwirkende, im zweiten Lagerabschnitt 130 (genauer: im zweiten Lagerbund 132) ausgebildete, jeweils radial nach innen ragende und in Umfangsrichtung verteilt angeordnete, mehrere (in den Figuren 5 und 6: drei) zweite Bajonettbundsegmente 134. Die zweite Bajonetterweiterungen 332 wirken mit den zweiten Bajonettbundsegmente 134 in analoger Weise zusammen wie die ersten Bajonetterweiterungen 322 mit den ersten Bajonettbundsegmenten 124 in dem in den Figuren 1 bis 4 gezeigten ersten Ausführungsbeispiel.

Das Zentrierelement 500 hat eine vom Riegelbolzen 300 (genauer: dem Bolzenschaft 308) durchsetzte Öffnung 502 und eine oder mehrere periphere Außenoberflächen 504. Diese peripheren Außenoberflächen 504 können als Zentrierfläche in Bezug zu dem zweiten Lagerbund 132 oder als Zentrierfläche in Bezug zu dem vierten Lagerbund 232 wirken, so dass der Riegelbolzen 300 im Bereich des Zentrierelement 500 in Bezug zu dem zweiten Lagerabschnitt 130 oder in Bezug zu dem zweiten Gegenlagerabschnitt 230 zentriert und bei entsprechender Ausgestaltung radial gelagert ist. In der in den Figuren 5 und 6 gezeigten zweiten Ausführungsform ist das Zentrierelement 500 axial im Bereich des zweiten Gegenlagerabschnitts 230 angeordnet und wirkt als Zentrierfläche bezüglich des zweiten Lagerbunds 232 wie nachfolgend näher beschrieben.

Im eingebauten Zustand ist das Zentrierelement 500 auf den Bolzenschaft 308 aufgeschoben und zwischen dem zweiten Ende 404 des Federelements 400 und der konusförmigen Ringschulter 310 des Riegelbolzens 300 angeordnet. Dabei hat das Zentrierelement 500 mehrere (hier: drei) in radialer Richtung voneinander beabstandet angeordnete kreissegmentförmige Fasen 508 oder Endflächen, die in Bezug zu einer zur Gelenkachse 102 koaxialen Symmetrieachse des Zentrierelement 500 ein Profil mit einem Neigungswinkel 510 aufweisen, der zumindest näherungsweise einem Konuswinkel 312 der konischen Ringschulter 310 des Riegelbolzens 300 entspricht und die an der konischen Ringschulter 310 anliegen, wie in der Figur 5 gezeigt. Die periphere Außenoberfläche 504 des Zentrierelements 500 ist in radialer Richtung an der konischen Ringschulter 310 aufspreizbar und kann im aufgespreizten Zustand an einer im Bereich des zweiten Gegenlagerabschnitts 230 angeordneten Innenoberfläche der Lagerbuchse 202 anliegen und dabei als Zentrierfläche in Bezug zu dem zweiten Gegenlagerabschnitts 230 wirken und den Riegelbolzen 300 in Bezug dazu zentrieren.

Diese Zentrierung wird unterstützt durch die von dem Federelement 400 bewirkte Vorspannung. Das zweite Ende 404 des Federelements 400 stützt sich nämlich an der konusförmigen Ringschulter 310 über das dazwischen angeordnete Zentrierelement 500 ab und drückt aufgrund der Vorspannung das Zentrierelement 500 in die Richtung zum proximalen Endabschnitt 302 des Riegelbolzens 300 (in der Figur 5 nach unten) gegen die konische Ringschulter 310. Durch das Zusammenwirken der elastischen Kraft (Vorspannung) des Federelements 400 mit der konischen Ringschulter 310 wird das Zentrierelement 500 an der der konischen Ringschulter 310 radial aufgespreizt, so dass seine periphere Außenoberfläche 504 gegen die Innenoberfläche des zweiten Gegenlagerabschnitts 230 der Lagerbuchse 210 gedrückt wird und auf diese Weise den Riegelbolzen 300 in Bezug zu dem Gegenlagerabschnitts 230 zentriert. Das Zentrierelement 500 dient dazu, radiale Maßunterschiede bzw. unterschiedliche Maßtoleranzen der Abmessungen des Riegelbolzens 300 (insbesondere des Bolzenkopfs 306) in Bezug zu den Abmessungen des zweiten Gegenlagerabschnitts 230 des zweiten Gelenkarms 200 auszugleichen.

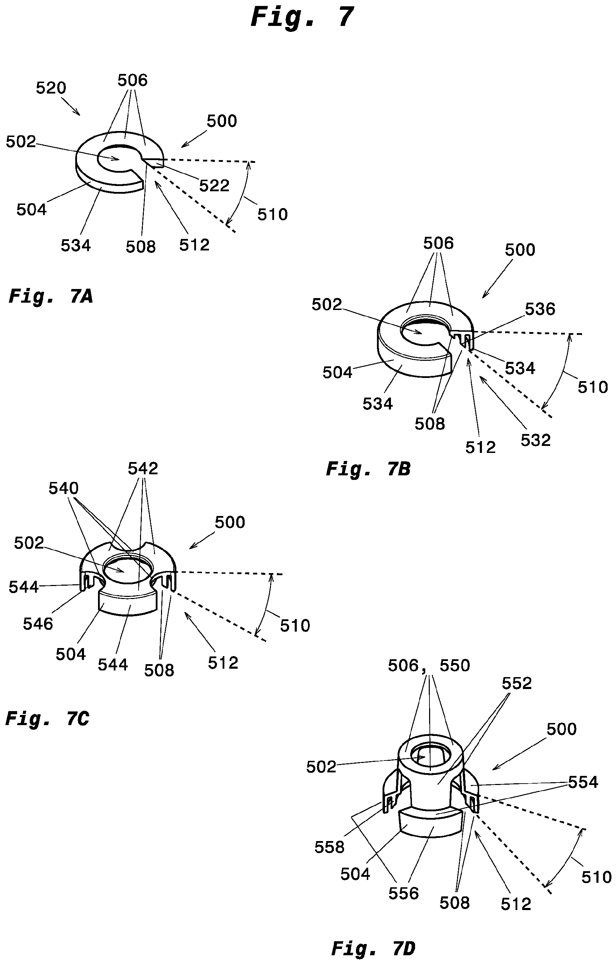

Neben der in den Figuren 5 und 6 gezeigten Ausgestaltung des Zentrierelements 500 sind auch andere Ausgestaltungen des Zentrierelements 500 denkbar, solange es eine von dem Bolzenschaft 308 durchsetzbare Öffnung 502, eine die Öffnung umringende Anlagefläche 506 zum Abstützen des zweiten Endes 404 des Federelements 400 und eine an einer Innenoberfläche des zweiten Lagerabschnitts 130 oder des zweiten Gegenlagerabschnitts 230 anlegbare periphere Außenoberfläche 504 umfasst und an der konischen Ringschulter 310 des Riegelbolzens 300 unter axialer Krafteinwirkung (durch das Federelement 400, wie oben beschrieben) aufspreizbar ist bzw. die zum Aufspreizen erforderlichen elastischen Eigenschaften aufweist. Die Figuren 7A bis 7D zeigen beispielhafte Ausgestaltungen des Zentrierelements 500.

In der in der Figur 7A gezeigten Ausgestaltung ist das Zentrierelement 500 eine Ringscheibe 520, deren Öffnung 502 von dem Bolzenschaft 308 durchsetzbar ist und die einen sich radial erstreckenden Schlitz 522 aufweist, durch den es radial aufspreizbar ist.

In der in der Figur 7B gezeigten Ausgestaltung, die der in den Figuren 5 und 6 gezeigten Ausgestaltung entspricht, umfasst das Zentrierelement 500 eine Ringscheibe 520 mit einer Öffnung 502, die von dem Bolzenschaft 308 durchsetzbar ist und die in Umfangsrichtung einen Schlitz 532 aufweist, ein äußeres Zylinderwandsegment 534, das sich von einem Kreisrandabschnitt der Ringscheibe 530 in axialer Richtung erstreckt und dessen Außenoberfläche 504 im eingesetzten und aufgespreizten Zustand des Zentrierelements 500 die Zentrierfläche in Bezug zu dem zweiten Lagerbund 222 und/oder vierten Lagerbund 232 ausbildet. Das Zentrierelement 500 umfasst ferner ein inneres Zylinderwandsegment 536, das radial innerhalb und konzentrisch zu dem äußeren Zylinderwandsegment 534 angeordnet ist und sich von dem Kreisringsegment 540 in gleicher axialer Richtung erstreckt, jedoch weniger weit als das äußere Zylinderwandsegment 534. Der Unterschied in der axialen Erstreckung des inneren und äußeren Zylinderwandsegments 536, 534 bildet ein Profil, das einen Neigungswinkel 510 aufweist, der zumindest näherungsweise dem Konuswinkel 312 konischen Ringschulter 310 des Riegelbolzens 300 entspricht und beim Aufspreizen mit der konischen Ringschulter 310 zusammenwirkt.

In der in der Figur 7C gezeigten Ausführungsform umfasst das Zentrierelement 500 einen Kreisringabschnitt 540, der die von dem Riegelbolzen 300 (Bolzenschaft 308) durchsetzbare Öffnung 502 umringt, mindestens zwei (hier vorzugsweise drei) sich von den Kreisringsegmenten 540 radial nach außen erstreckende Zungen 542 und mindestens zwei (hier: drei) den Zungen 542 zugeordnete äußere Zylinderwandsegmente 544, die sich von einer jeweiligen Zunge 542 in axialer Richtung erstrecken. Die Mantelaußenoberflächen 504 der Zylinderwandsegmente 544 bilden im eingesetzten und aufgespreizten Zustand des Zentrierelements 500 zusammen die Zentrierfläche in Bezug zu dem zweiten und/oder vierten Lagerbund 132, 232 aus. Analog zu der in der Figur 7B gezeigten Ausführungsform umfasst das Zentrierelement 500 in der Figur 7C den äußeren Zylinderwandsegmenten 544 zugeordnete innere Zylinderwandsegmente 546, die radial innerhalb und konzentrisch zu den äußeren Zylinderwandsegmenten 542 angeordnet sind und sich von der jeweiligen Zunge 542 in gleicher axialer Richtung erstrecken, jedoch weniger weit als die äußeren Zylinderwandsegmente 544. Der Unterschied in der axialen Erstreckung der inneren und äußeren Zylinderwandsegments 546, 542 bildet ein Profil, das einen Neigungswinkel 510 aufweist, der zumindest näherungsweise dem Konuswinkel 312 konischen Ringschulter 310 des Riegelbolzens 300 entspricht und beim Aufspreizen mit der konischen Ringschulter 310 zusammenwirkt.

Bei der in der Figur 7D gezeigten Ausführungsform umfasst das Zentrierelement 500 einen Kreisringabschnitt 550, der die von dem Bolzenschaft 308 durchsetzbare Öffnung 502 umringt, mindestens zwei (hier vorzugsweise: drei) Rohrwandsegmente 552, die sich von der Peripherie des Kreisringabschnitts 550 in axialer Richtung erstrecken, mindestens zwei (hier: drei) den Rohrwandsegmenten 552 zugeordnete Kreisringsegmente 554, die sich von jeweiligen axialen Endabschnitten der Rohrwandsegmente 552 radial nach außen erstrecken, und mindestens zwei (hier: drei) den Kreisringsegmenten 554 zugeordnete äußere Zylinderwandsegmente 556, die sich vom jeweiligen Kreisringsegment 554 in axialer Richtung erstrecken und deren Außenoberfläche 504 im eingesetzten und aufgespreizten Zustand des Zentrierelements 500 zusammen die Zentrierfläche in Bezug zu dem zweiten und/oder vierten Lagerbund 132, 232 ausbilden. Analog zu den in den Figuren 7B und 7C gezeigten Ausführungsformen umfasst Zentrierelement 500 in der Figur 7D ferner den äußeren Zylinderwandsegmenten 556 zugeordnete innere Zylinderwandsegmente 558, die jeweils radial innerhalb und konzentrisch zu den äußeren Zylinderwandsegmenten 556 angeordnet sind und sich von dem jeweiligen Kreisringsegment 554 in gleicher axialer Richtung erstrecken, jedoch weniger weit als die äußeren Zylinderwandsegmente 556. Auch hier bildet der Unterschied in der axialen Erstreckung der inneren und äußeren Zylinderwandsegments 546, 542 ein Profil, das einen Neigungswinkel 510 aufweist, der zumindest näherungsweise dem Konuswinkel 312 konischen Ringschulter 310 des Riegelbolzens 300 entspricht und beim Aufspreizen mit der konischen Ringschulter 310 zusammenwirkt. Die axiale Erstreckung der Rohrwandsegmente 552 bewirkt einen axialen Versatz zwischen dem zur Anlage an der konischen Ringschulter 310 ausgebildeten Profil mit Neigungswinkel 510 und der Anlagefläche 506 für das zweite Ende 404 des Federelements 400. Ein derartiger axialer Versatz ermöglicht die Verwendung eines kürzeren Federelements (Spiralfeder) 400.

In den in den Figuren 7A bis 7D gezeigten Ausgestaltungen hat das Zentrierelement 500 an seiner der konischen Ringschulter 310 zuwendbaren Seite um die zur Gelenkachse 102 koaxiale Symmetrieachse eine oder mehrere zumindest abschnittsweise umlaufende Fasen 508, die jeweils einen Neigungswinkel 510 aufweisen, der zumindest näherungsweise dem Konuswinkel 312 konischen Ringschulter 310 des Riegelbolzens 300 entspricht.

Mit Verweis auf die Figur 6 wird die aus dem ersten Gelenkarm 100, dem zweiten Gelenkarm 200, dem Riegelbolzen 300, dem Federelement 400 und dem Zentrierelement 500 bestehende Gelenkvorrichtung 10 des zweiten Ausführungsbeispiels wie folgt zusammengebaut. Zunächst wird das Zentrierelement 500 und anschließend das hier als Spiralfeder ausgebildete Federelement 400 über den Bolzenschaft 308 des Riegelbolzens 300 geschoben, bis das zweite Ende 404 des Federelements 400 in axialer Richtung an der Anlagefläche 506 des Zentrierelements 500 und das am entgegengesetzten Ende des Zentrierelements 500 ausgebildete Profil mit dem Neigungswinkel 510 an der Ringschulter 310 am Bolzenkopf 306 anschlägt. Dann wird die Lagerbuchse 210 des zweiten Gelenkarms 200 zwischen den ersten und zweiten Lagerabschnitt 120, 130 des ersten Gelenkarms 100 geführt und die Achse der Lagerbuchse 210 im Wesentlichen koaxial zu der Gelenkachse 102 des ersten Gelenkarms 100 ausgerichtet. Dann wird der Riegelbolzen 300 mit aufgesetztem Zentrierelement 500 und aufgesetztem Federelement 400 mit dem distalen Endabschnitt 304 voran durch den zweiten Lagerabschnitt 130 des ersten Gelenkarms 100, den zweiten Gegenlagerabschnitt 230 und den ersten Gegenlagerabschnitt 220 der Lagerbuchse 210 des zweiten Gelenkarms 200 hindurch eingeführt, bis der distale Endabschnitt 304 den Bereich des ersten Lagerabschnitts 120 des ersten Gelenkarms 100 erreicht hat. Beim Einführen des Riegelbolzens 300 wird dieser so um seine Achse verdreht, dass die zweiten Bajonetterweiterungen 332 an seinem proximalen Endabschnitt 302 (genauer: am Bolzenkopf 306) zwischen den zweiten Bajonettbundsegmenten 134 des zweiten Lagerbunds 132 in axialer Richtung hindurch und an diesen vorbei gleiten können. Dann wird der Riegelbolzen 300 weiter geschoben bis die zweiten Bajonetterweiterungen 332 an den zweiten Bajonettbundsegmenten 134 vorbei geglitten sind. Sodann wird der Riegelbolzen 300 um seine Achse verdreht, so dass die zweiten Bajonetterweiterungen 332 axial hinter die zweiten Bajonettbundsegmente 134 kommen und mit diesen in Eingriff kommen, wodurch die Verriegelung des Riegelbolzens 300 mit dem ersten Gelenkarm 100 zustande kommt. Durch entsprechende Hinterschneidungen der Bajonetterweiterungen 334 und der ersten Bajonettbundsegmente 126 kann dabei auch ein Hintergriff erzielt werden. Nach Zustandekommen der Verriegelung kann der Riegelbolzen 300 nicht mehr in der zur Einführungsrichtung entgegengesetzten Richtung zurückgezogen werden oder herausfallen, und ist hinsichtlich seiner axialen Position festgelegt.

Die zweiten Bajonetterweiterungen 332 weisen Mantelaußenflächen auf, die an einer Innenoberfläche des zweiten Lagerbunds 122 anliegen und auf diese Weise zusammen den zweiten Riegelbolzen-Mantelabschnitt 342 bilden, über den Riegelbolzen 300 (genauer: dessen proximaler Endabschnitt 302 mit dem Bolzenkopf 306) bezüglich des zweiten Lagerbunds 122 zentriert ist.

Das in der Figur 8 gezeigte dritte Ausführungsbeispiel hat mit dem in den Figuren 5 und 6 gezeigten zweiten Ausführungsbeispiel zum Einen gemeinsam, dass der Verriegelungsabschnitt 140 im Bereich des zweiten Lagerabschnitts 130 (genauer: des zweiten Lagerbunds 132) angeordnet ist und die Verriegelung zwischen dem Riegelbolzen 300 (genauer: dem Bolzenkopf 306) und dem zweiten Lagerbund 132 über eine zweite Bajonettverbindung 330, die analog zu der in der Figur 6 gezeigten ausgebildet ist, und zum anderen, dass axial zwischen dem zweiten Ende des Federelements 400 und der konischen Ringschulter 310 des Riegelbolzens 300 ein Zentrierelement 500 vorgesehen ist.

Das in der Figur 8 gezeigte dritte Ausführungsbeispiel unterscheidet sich von dem in den Figuren 5 und 6 gezeigten zweiten Ausführungsbeispiel hinsichtlich der Ausgestaltung des proximalen Endabschnitts 302 (genauer: des Bolzenkopfs 306) des Riegelbolzens 300, der Ausgestaltung des Zentrierelements 500, der Ausgestaltung des ersten Gegenlagerabschnitts 220 und der Ausgestaltung des Tragearmabschnitts, der einen Spiegeltrageabschnitt (nicht gezeigt) des zweiten Gelenkarms 200 mit dem Endabschnitt 202 des zweiten Gelenkarms 200 verbindet. Diese Ausgestaltungsunterschiede und die damit erzielbaren Vorteile werden nachfolgend näher beschrieben.

Der Bolzenkopf 306 des Riegelbolzens 300 gemäß dem dritten Ausführungsbeispiel erstreckt sich axial im Bereich des zweiten Lagerabschnitts 130 des ersten Gelenkarms 100 und des zweiten Gegenlagerabschnitts 230 des zweiten Gelenkarms 200. Dieser Bolzenkopf 306 hat proximal einen ersten Bolzenkopfabschnitt 314, der radial erweitert ist und sich im Bereich des zweiten Lagerabschnitts 130 erstreckt, und einen bezüglich des ersten Bolzenkopfabschnitts 314 distal angeordneten, zweiten Bolzenkopfabschnitt 316, der radial verjüngt ist und sich im Bereich des zweiten Gegenlagerabschnitts 230 erstreckt. Am Übergang vom ersten 314 zum zweiten 316 Bolzenkopfabschnitt eine weitere Ringschulter (nicht bezeichnet) ausgebildet. Am Übergang vom zweiten Bolzenkopfabschnitt 316 zum Bolzenschaft 308 ist die konusförmige Ringschulter 310 mit Konuswinkel 312 ausgebildet und dazu vorgesehen, mit dem Zentrierelement 500 zusammenzuwirken, d.h. dieses unter Wirkung der von dem Federelement 400 erzeugten Vorspannung (axialen Kraftwirkung) radial aufzuspreizen, wie für das zweite Ausführungsbeispiel und bezüglich der Figuren 5 bis 7 beschrieben.

Die zweite Bajonettverbindung 330 wirkt hier zwischen dem ersten Bolzenkopfabschnitt 314 und dem zweiten Lagerabschnitt 130, analog zu der zweiten Bajonettverbindung 330 im zweiten Ausführungsbeispiel, die zwischen dem Bolzenkopf 306 und dem zweiten Lagerabschnitt 130 wirkt.

In einer Weiterentwicklung des in der Figur 8 gezeigten Ausführungsbeispiels können der Bolzenkopf 306, d.h. der erste und der zweite Bolzenkopfabschnitt 314, 316, und/oder der Bolzenschaft 308 des Riegelbozens 300 konisch ausgebildet sein und sich in Richtung zum distalen Endabschnitt 304 verjüngen. Eine derartige konische Ausbildung des Riegelbolzens 300 erleichtert (vereinfacht) beim Zusammenbau der Bauteile 100 bis 500 der Gelenkvorrichtung die Einführung des Riegelbolzens 300 durch den zweiten Lagerabschnitt 130, den zweiten Gegenlagerabschnitt 230, den ersten Gegenlagerabschnitt 130 und den ersten Lagerabschnitt 120.

Die Ausgestaltung des Zentrierelements 500 des in der Figur 8 gezeigten dritten Ausführungsbeispiels entspricht der in der Figur 7D gezeigten Ausgestaltung dahingehend, dass das Zentrierelement 500 in der Figur 8 einen axialen Versatz zwischen der die Öffnung 502 umringenden Auflagefläche 506 für das zweite Ende des Federelements 400 und der zur Anlage an der konischen Ringschulter 310 des Bolzenkopfs 306 ausgebildeten Fläche, die ein Profil und/oder eine den Riegelbolzen 300 zumindest abschnittsweise umringende Fase 508 mit einem Neigungswinkel 510 aufweist, der dem Konuswinkel 312 der konischen Ringschulter 310 zumindest näherungsweise entspricht. Wie bereits erwähnt, ermöglicht dieser axiale Versatz die Verwendung eines in axialer Richtung kürzeren Federelements 400.

Das Zentrierelement 500 in der Figur 8 hat periphere Außenoberflächen 504 analog zu der in der Figur 7D gezeigten Ausgestaltung. Im eingebauten Zustand erstrecken sich die peripheren Außenoberflächen 504 axial nicht nur im Bereich des zweiten Gegenlagerabschnitts 230 (genauer: des zweiten Lagerbunds 232) und wirken diesbezüglich 230, 232 als Zentrierflächen, wie in dem in den Figuren 5 und 6 gezeigten zweiten Ausführungsbeispiel, sondern erstrecken sich zusätzlich auch im Bereich des ersten Gegenlagerabschnitts 130 (genauer: des ersten Lagerbunds 132) und wirken auch diesbezüglich 130, 132 als Zentrierflächen. Im dritten Ausführungsbeispiel dient das Zentrierelement 500 dazu, radiale Maßunterschiede bzw. unterschiedliche Maßtoleranzen der Abmessungen des Riegelbolzens 300 (insbesondere des Bolzenkopfs 306) sowohl in Bezug zu den Abmessungen des zweiten Gegenlagerabschnitts 230 des zweiten Gelenkarms 200 als auch zu den Abmessungen des zweiten Lagerabschnitts 130 des ersten Gelenkarms 100 auszugleichen.

In dem in der Figur 8 gezeigten dritten Ausführungsbeispiel ist der erste Gegenlagerabschnitt 220 der Lagerbuchse 210 abschnittsweise (bei 224) becherförmig koaxial zur Gelenkachse 102 ausgebildet, d.h. der erste Gegenlagerabschnitt 220 umfasst einen becherförmigen Abschnitt 224 mit einem Becherrand, der dem ersten Lagerabschnitt zugewendet ist, und einem Becherboden, der axial einwärts, d.h. in Richtung zum zweiten Gegenlagerabschnitt 230 versetzt, in Bezug zu dem Becherrand angeordnet ist. Im Becherboden ist der dritte Lagerbund 222 ausgebildet. Am Becherboden, genauer an der dem zweiten Gegenlagerabschnitt 230 zugewandten Seite des Becherbodens, ist die Auflagefläche für das erste Ende 402 des Federelements 400 ausgebildet. Die axiale Erstreckung des becherförmigen Abschnitts 224, d.h. der axiale Versatz zwischen dem Becherrand und dem Becherboden, ermöglicht die Verwendung eines in axialer Richtung (noch) kürzeren Federelements 400.

Die mit Verweis auf die Figuren 1 bis 6 und 8 beschriebenen Gelenkvorrichtungen 10 gemäß dem ersten, zweiten und dritten Ausführungsbeispiel sind dazu ausgelegt und vorgesehen, eine schwenkbare Gelenkverbindung zwischen einer Spiegelvorrichtung (nicht gezeigt), einschließlich etwa eines Außenspiegels, die von einem der beiden Gelenkarme 100 oder 200 getragen werden kann, und einer Fahrzeug-Außenwand eines Fahrzeugs (nicht gezeigt), an der der andere der beiden Gelenkarme 200 oder 100 befestigt werden kann, herzustellen. Bei den in den Figuren 1 bis 6 und 8 gezeigten Gelenkvorrichtungen 10 ist der erste Gelenkarm 100 zur Befestigung am Fahrzeug und der zweite Gelenkarm 200 zum Tragen der Spiegelvorrichtung vorgesehen. Dazu umfasst der erste Gelenkarm 100 einen Basisabschnitt 104 mit einer dem Fahrzeug zuwendbaren Seite und einem ersten (in den Figuren 1 bis 6 und 8 oberen) und einem zweiten (in den Figuren 1 bis 6 und 8 unteren) Ende, einen sich vom ersten Ende in Richtung weg von der dem Fahrzeug zuwendbaren Seite erstreckenden ersten Haltearm 142, an bzw. in dessen distalem Abschnitt der erste Lagerabschnitt 120 ausgebildet ist, und einen sich vom zweiten Ende in Richtung weg von der dem Fahrzeug zuwendbaren Seite erstreckenden zweiten Haltearm 144, an bzw. in dessen distalem Abschnitt der zweite Lagerabschnitt 130 ausgebildet ist, wobei der erste und der zweite Lagerabschnitt 120, 130 einander zugewandt sind und wobei der erste und zweite Haltearm 142, 144 den Endabschnitt 202 des zweiten Gelenkarms 200 umgreifen. Der zweite Gelenkarm 200 umfasst an seinem einen Ende den zwischen dem ersten und dem zweiten Lagerabschnitt 120, 130 angeordneten Endabschnitt 202 sowie einen Spiegeltrageabschnitt (nicht gezeigt), der an dem zu dem Endabschnitt 202 entgegengesetzten Ende angeordnet ist und an dem die Spiegelvorrichtung (nicht gezeigt) angeordnet und typischerweise bezüglich des zweiten Gelenkarms 200 in zwei zueinander senkrechten Richtungen verschwenkbar gelagert ist.

In dem in der Figur 8 gezeigten dritten Ausführungsbeispiel ist der Endabschnitt 202 über einen Tragearmabschnitt 204 mit dem Spiegeltrageabschnitt (nicht gezeigt) verbunden.

Im Gegensatz dazu ist in den in den Figuren 1 bis 4 und 5 bis 6 gezeigten, ersten und zweiten Ausführungsbeispiel der Endabschnitt 202 über zwei Tragearmabschnitte 204 und 206, die im Wesentlichen parallel zueinander verlaufen können, mit dem Spiegeltrageabschnitt verbunden. Dabei ist zwischen dem ersten und dem zweiten Tragearmabschnitte 204 und 206 zur Verbesserung der Aerodynamik bzw. des ästhetischen Gesamteindrucks der Gelenkvorrichtung 10 eine Winddurchlassöffnung 208 ausgebildet.

In dem in der Figur 8 gezeigten Ausführungsbeispiel ist in der Gelenkvorrichtung 10 noch ein Kabel 30 zur elektrischen Versorgung eines Verbrauchers, wie etwa eines elektrisch verstellbaren Spiegelkopfs (nicht gezeigt), der an dem zum Endabschnitt 202 entgegengesetzten Ende des zweiten Gelenkarms 200 angeordnet ist, und gegebenenfalls zur Übertragung von Steuersignalen zu dem und von dem Verbraucher vorgesehen. Das Kabel 30 ist im proximalen Endabschnitt 302, genauer im Bolzenkopf 306, des hohl ausgestalteten Riegelbolzens 300, durch eine in der Ringschulter 310 ausgebildete Öffnung 318 (auch in der Figur 6 gezeigt) aus dem Inneren des Bolzenkopfs 306 heraus, durch die Lagerbuchse 210 und durch eine in einer Wand der Lagerbuchse 210 ausgebildete weitere Öffnung (nicht bezeichnet) in das Innere des Tragearmabschnitts 204 geführt, und verläuft darin weiter bis zu dem Verbraucher.

### Bezuaszeichenliste

- 10: Gelenkvorrichtung
- 20: Fahrzeug
- 30: Kabel
- 100: erster Gelenkarm
- 102: Gelenkachse
- 104: Basisabschnitt
- 110: erste Rastfläche
- 120: erster Lagerabschnitt
- 122: erster Lagerbund
- 124: erstes Bajonettbundsegment
- 130: zweiter Lagerabschnitt
- 132: zweiter Lagerbund
- 134: zweites Bajonettbundsegment
- 140: Verriegelungsabschnitt
- 142: erster Haltearmabschnitt
- 144: zweiter Haltearmabschnitt
- 200: zweiter Gelenkarm
- 202: Endabschnitt
- 204: erster Tragearmabschnitt
- 206: zweiter Tragearmabschnitt
- 208: Winddurchlassöffnung
- 210: Lagerbuchse
- 220: erster Gegenlagerabschnitt
- 222: dritter Lagerbund
- 224: becherförmiger Abschnitt
- 226: zweite Rastfläche
- 230: zweiter Gegenlagerabschnitt
- 232: vierter Lagerbund
- 250: erster Haltearm
- 252: zweiter Haltearm
- 300: Riegelbolzen
- 302: proximaler Endabschnitt
- 304: distaler Endabschnitt
- 306: Bolzenkopf
- 308: Bolzenschaft
- 310: Ringschulter
- 312: Konuswinkel
- 314: erster Bolzenkopfabschnitt
- 316: zweiter Bolzenkopfabschnitt
- 318: Öffnung
- 320: erste Bajonettverbindung
- 322: erste Bajonetterweiterung
- 330: zweite Bajonettverbindung
- 332: zweite Bajonetterweiterung
- 340: erster Riegelbolzen-Mantelflächenabschnitt
- 342: zweiter Riegelbolzen-Mantelflächenabschnitt
- 344: dritter Riegelbolzen-Mantelflächenabschnitt
- 346: vierter Riegelbolzen-Mantelflächenabschnitt
- 400: Federelement
- 402: erstes Ende
- 404: zweites Ende
- 500: Zentrierelement
- 502: Öffnung
- 504: Außenoberfläche
- 506: Anlagefläche
- 508: Fase
- 510: Neigungswinkel
- 512: Endfläche
- 520: Ringscheibe
- 522: Schlitz
- 530: Ringscheibe
- 532: Schlitz
- 534: äußeres Zylinderwandsegment
- 536: inneres Zylinderwandsegment
- 540: Kreisringabschnitt
- 542: Zunge
- 544: äußeres Zylinderwandsegment
- 546: inneres Zylinderwandsegment
- 550: Kreisringabschnitt
- 552: Rohrwandsegment
- 554: Kreisringsegment
- 556: äußeres Zylinderwandsegment
- 558: inneres Zylinderwandsegment

## Patentansprüche

1. Gelenkvorrichtung (10), insbesondere zur schwenkbaren Befestigung eines Außenspiegels an einem Fahrzeug (20), mit:
einem ersten Gelenkarm (100), der einen ersten und einen zweiten Lagerabschnitt (120, 130) und mindestens einen Verriegelungsabschnitt (140) aufweist,
einem zweiten Gelenkarm (200) mit einem Endabschnitt (202), der eine Lagerbuchse (210) aufweist, wobei die Lagerbuchse zwischen dem ersten und zweiten Lagerabschnitt (120, 130) angeordnet ist und einen mit dem ersten Lagerabschnitt (120) zusammenwirkenden, ersten Gegenlagerabschnitt (220) und einen mit dem zweiten Lagerabschnitt (130) zusammenwirkenden, zweiten Gegenlagerabschnitt (230), aufweist, wobei der zweite Gelenkarm (200) in axialer Richtung gegen den ersten Gelenkarm (100) mittels eines Federelements (400) vorgespannt und um eine Gelenkachse (102) verschwenkbar ist;
einem Riegelbolzen (300) mit einem an einem proximalen Endabschnitt (302) angeordneten Bolzenkopf (306) und einem distalen Endabschnitt (304) zum schwenkbaren Verbinden der beiden Gelenkarme (100, 200), wobei der Riegelbolzen den ersten Lagerabschnitt (120), die Lagerbuchse (210) und den zweiten Lagerabschnitt (130) mit einem Bolzenschaft (308) durchsetzt und in dem mindestens einen Verriegelungsabschnitt (140) zumindest axial fixiert ist; und
einem Zentrierelement (500), welches eine von dem Bolzenschaft (308) durchsetzbare Öffnung (502) und eine die Öffnung (502) umringende Anlagefläche (506) zum Abstützen eines Endes (404) des Federelements (400) aufweist,
**dadurch gekennzeichnet, dass** das Zentrierelement (500), aufgrund des Federelements (400), in Richtung zum proximalen Endabschnitt (302) des Riegelbolzens (300) gedruckt wird, und dass es weiterhin aufweist:
eine periphere Außenoberfläche (504), welche unter axialer Krafteinwirkung durch das Federelement (400) radial aufspreizbar ist bzw. die zum Aufspreizen erforderlichen elastischen Eigenschaften aufweist, so dass das Zentrierelement (500) und damit der Riegelbolzen (300) in Bezug zu dem zweiten Lagerabschnitt (130) oder dem zweiten Gegenlagerabschnitt (230) zentriert, und radial gelagert, ist.

2. Gelenkvorrichtung nach Anspruch 1, **dadurch gekennzeichnet, dass** die periphere Außenoberfläche (504) des Zentrierelements (500) an einer Innenoberfläche des zweiten Lagerabschnitts (130) oder des zweiten Gegenlagerabschnitts (230) anlegbar ist und an einer konischen Ringschulter (310) des Riegelbolzens (300) unter axialer-Krafteinwirkung durch das Federelement (400) aufspreizbar ist.

3. Gelenkvorrichtung nach Anspruch 1 oder 2, **dadurch gekennzeichnet, dass** der Riegelbolzen (300) einen am proximalen Endabschnitt (302) ausgebildeten Bolzenkopf (306) und den sich von dem Bolzenkopf (306) zum distalen Endabschnitt (304) erstreckenden Bolzenschaft (308) aufweist, wobei am Übergang vom Bolzenschaft (308) zum Bolzenkopf (306) die konische Ringschulter (310) ausgebildet ist,
dass das Federelement (400) ein erstes Ende (402) und ein zweites Ende (404) aufweist, wobei das erste Ende (402) sich insbesondere am zweiten Gelenkarm, etwa im Bereich des ersten Gegenlagerabschnitts (220), unmittelbar oder mittelbar abstützt,
dass das Zentrierelement (500) zwischen dem zweiten Ende (404) des Federelements (400) und der Ringschulter (310) angeordnet ist, so dass sich das zweite Ende (404) über das Zentrierelement (500) an der Ringschulter (310) abstützt, und
dass das Zentrierelement (500) so ausgebildet ist, dass es unter der Wirkung der auf es axial in Richtung zum Bolzenkopf (306) wirkenden elastischen Kraft des Federelements (400) an der konischen Ringschulter (310) radial aufspreizen kann.

4. Gelenkvorrichtung nach einem der Ansprüche 1 bis 3, **dadurch gekennzeichnet, dass** das Zentrierelement (500) eine der folgenden, insbesondere einteilig und/oder aus einem elastischen Material hergestellten, Ausgestaltungen aufweist:
(A) die periphere Außenoberfläche (504) des Zentrierelements (500) ist eine in Umfangsrichtung umlaufende Fläche, insbesondere ist das Zentrierelement ein Ring, wie etwa ein O-Ring oder eine Ringscheibe (520),
(B) das Zentrierelement (500) hat einen sich in radialer Richtung erstreckenden Schlitz (522), der an seinem radial inneren Ende in die Öffnung (502) mündet und an seinem radial äußeren Ende offen ist, und die periphere Außenoberfläche (504) ist eine in Umfangsrichtung mit Ausnahme des aufgrund des Schlitzes (522) offenen Abschnitts umlaufende Fläche, oder
(C) die periphere Außenoberfläche (504) des Zentrierelements (500) umfasst mindestens zwei, vorzugsweise drei, in Umfangsrichtung versetzt, insbesondere gleichmäßig verteilt, angeordnete Mantelflächensegmente (534, 542, 556).

5. Gelenkvorrichtung nach einem der Ansprüche 1 bis 4, **dadurch gekennzeichnet, dass** das Zentrierelement (500) an seinem der konischen Ringschulter (310) zugewandten Ende:
- mindestens eine Fase (508) oder ein in einem Radialschnitt als Keil geformtes Profil, die bzw. das in Umfangsrichtung durchgehend oder unterbrochen um die Öffnung (502) herum ausgebildet ist und in radialer Richtung in Bezug zu der Schwenkachse (102) einen Neigungswinkel (510) aufweist, der insbesondere einem Konuswinkel (312) der konischen Ringschulter (310) entspricht, und/oder
- mindestens zwei, vorzugsweise drei, in Umfangsrichtung beabstandet, vorzugsweise gleichmäßig verteilt angeordnete, kreissegmentförmige Fasen (508) oder Endflächen, die in radialer Richtung in Bezug zu der Schwenkachse (102) einen Neigungswinkel (510) aufweisen, der insbesondere einem Konuswinkel (312) der konischen Ringschulter (310) entspricht.

6. Gelenkvorrichtung nach einem der Ansprüche 1 bis 5, **dadurch gekennzeichnet, dass** der erste Lagerabschnitt (120) einen ersten Lagerbund (122) aufweist, der mit mindestens einem ersten Riegelbolzen-Mantelflächenabschnitt (340) zusammenwirkt, welcher im Bereich des distalen Endabschnitts (304) des Riegelbolzens (300) angeordnet ist,
so dass der Riegelbolzen (300) im Bereich dieses ersten Riegelbolzen-Mantelflächenabschnitts (340) bezüglich des ersten Lagerbunds (122) zentriert, insbesondere radial gelagert, ist.

7. Gelenkvorrichtung nach einem der Ansprüche 1 bis 6, **dadurch gekennzeichnet, dass** der zweite Lagerabschnitt (130) einen zweiten Lagerbund (132) aufweist, der mit mindestens einem zweiten Riegelbolzen-Mantelflächenabschnitt (342) zusammenwirkt, welcher im Bereich des proximalen Endabschnitts (302) des Riegelbolzens (300) angeordnet ist,
so dass der Riegelbolzen (300) im Bereich dieses zweiten Riegelbolzen-Mantelflächenabschnitts (342) bezüglich des zweiten Lagerbunds (132) zentriert, insbesondere radial gelagert, ist.

8. Gelenkvorrichtung nach einem der Ansprüche 1 bis 7, **dadurch gekennzeichnet, dass** der erste Gegenlagerabschnitt (220) einen dritten Lagerbund (222) aufweist, der mit mindestens einem dritten Riegelbolzen-Mantelflächenabschnitt (344) zusammenwirkt, welcher axial zwischen dem ersten und zweiten Lagerabschnitt (120, 130), insbesondere im Bereich des distalen Endabschnitts (304) angeordnet ist,
so dass der Riegelbolzen (300) im Bereich dieses dritten Riegelbolzen-Mantelflächenabschnitts (344) bezüglich des dritten Lagerbunds (222) zentriert, insbesondere radial gelagert, ist.

9. Gelenkvorrichtung nach einem der Ansprüche 1 bis 8, **dadurch gekennzeichnet, dass** der zweite Gegenlagerabschnitt (230) einen vierten Lagerbund (232) aufweist, der mit einem vierten Riegelbolzen-Mantelflächenabschnitt (346) zusammenwirkt, welcher axial zwischen dem ersten und zweiten Lagerabschnitt (120, 130), insbesondere im Bereich des proximalen Endabschnitts (302) des Riegelbolzens (300) angeordnet ist,
so dass der Riegelbolzen (300) im Bereich dieses vierten Riegelbolzen-Mantelflächenabschnitts (346) bezüglich des vierten Lagerbunds (232) zentriert, insbesondere radial gelagert, ist.

10. Gelenkvorrichtung nach einem der Ansprüche 1 bis 9, **dadurch gekennzeichnet, dass** die Verbindung zwischen dem Riegelbolzen (300) und dem Verriegelungsabschnitt (140) als Bajonettverbindung (320, 330), als Quick-Lock-Verbindung, als Schnappverbindung und/oder als Splintverbindung ausgebildet ist.

11. Gelenkvorrichtung nach einem der Ansprüche 1 bis 10, **dadurch gekennzeichnet, dass** die Verbindung zwischen dem Riegelbolzen (300) und dem Verriegelungsabschnitt (140) im ersten Lagerabschnitt (120) und/oder im zweiten Lagerabschnitt (130) angeordnet ist.

12. Gelenkvorrichtung nach einem der Ansprüche 1 bis 11, **dadurch gekennzeichnet, dass** die Gelenkvorrichtung (10) als Friktionsgelenk ausgebildet ist.

13. Gelenkvorrichtung nach einem der Ansprüche 1 bis 11, **dadurch gekennzeichnet, dass** die Gelenkvorrichtung (10) als Rastgelenk ausgebildet ist, und
dass insbesondere der erste Lagerabschnitt (120) eine zumindest abschnittsweise im Wesentlichen senkrecht zur Gelenkachse (102) ausgebildete erste Rastfläche (110) aufweist, und dass der erste Gegenlagerabschnitt (220) eine zumindest abschnittweise im Wesentlichen senkrecht zur Gelenkachse (102) ausgebildete zweite Rastfläche (226) aufweist, die zu der ersten Rastfläche (110) komplementär ist und mit dieser zusammenwirkt, oder
dass ein Mantelflächenabschnitt der Lagerbuchse (210) eine erste Rastfläche aufweist und der erste Gelenkarm (100) einen zwischen dem ersten und zweiten Lagerabschnitt (120, 130) ausgebildeten Flächenabschnitt aufweist, der eine zweite Rastfläche aufweist, die zu der ersten Rastfläche komplementär ist und mit dieser zusammenwirkt.

14. Spiegelhalterung zur Befestigung eines Spiegels an einem Fahrzeug, **gekennzeichnet durch** eine Gelenkvorrichtung nach einem der Ansprüche 1 bis 13.

15. Spiegelanordnung mit einem Spiegelkopf und einer Spiegelhalterung nach Anspruch 14.

## Claims

1. Swivel joint system (10), particularly for swivelling attachment of an exterior mirror to a vehicle (20), with:
a first articulated arm (100) which has a first and a second bearing shell (120, 130) and
at least one locking shell (140),
a second articulated arm (200) with an end section (202) that has a bush bearing (210), wherein the bush bearing is positioned between the first and second bearing shell (120, 130) and has a first counter bearing shell (220) interacting with the first bearing shell (120) and a second counter bearing shell (230) interacting with the second bearing shell (130),
wherein the second articulated arm (200) is biased against the first articulated arm (100) in the axial direction by means of a spring element (400) and can be swivelled about a joint axle (102); and
a locking pin (300) with a pin head (306) arranged on a proximal end section (302) and a distal end section (304) for the swivel connection of the two articulated arms (100, 200),
wherein the locking pin (300) penetrates the first bearing shell (120), the bush bearing (210) and the second bearing shell (130) with a pin shaft (308) and is fixed axially in the at least one locking shell (140), and
a centring element (500) that has an opening (502) penetrable by the pin shaft (308) and an application surface (506) that surrounds the opening (502) to support an end (404) of the spring element (400); and
**characterized in that**
the centring element (500) is pushed in the direction towards the proximal end section (302) of the locking pin (300) due to the spring element (400), and that it further comprises:
a peripheral outer surface (504) that can be radially spread out under axial application of force through the spring element (400) or that has the elastic properties required for spreading out, so that the centring element (500) and thus the locking pin (300) is centred and radially positioned in regard to the second bearing shell (130) or the second counter bearing shell (230).

2. The swivel joint system according to claim 1, **characterised in that** the peripheral outer surface (504) of the centring element (500) can be applied to an inner surface of the second bearing shell (130) or the second counter bearing shell (230), and can be spread out on a conical ring collar (310) of the locking pin (300) under axial application of force through the spring element (400).

3. Swivel joint system according to claim 1 or 2, **characterised in that** the locking pin (300) has a pin head (306) designed on the proximal end section (302) and the pin shaft (308) extending from the pin head (306) to the distal end section (304), with the conical ring collar (310) provided on the transition from the pin shaft (308) to the pin head (306),
that the spring element (400) has a first end (402) and a second end (404), with the first end (402) is supported directly or indirectly in particular on the second articulated arm approximately in the area of the first counter bearing shell (220),
that the centring element (500) is positioned between the second end (404) of the spring element (400) and the ring collar (310) so that the second end (404) is supported through the centring element (500) on the ring collar (310), and
that the centring element (500) is designed so that it can spread out radially under the impact of the axial elastic force of the spring element (400) acting in the direction toward the pin head (306) on the conical ring collar (310).

4. Swivel joint system according to one of the claims 1 to 3, **characterised in that** the centring element (500) has one of the following forms and is produced as one piece and/or of elastic material in particular:
(A) the peripheral outer surface (504) of the centring element (500) is a surface running in the circumferential direction; in particular, the centring element is a ring like an O-ring or a ring disc (520),
(B) the centring element (500) has a slit (522) extending in a radial direction, which feeds into the opening (502) on its radially inner end and is open at its radial outer end, and the peripheral outer surface (504) is a circumferential surface in the direction of the circumference with the exception of the section open due to the slit (522).
(C) The peripheral outer surface (504) of the centring element (500) includes at least two, preferably three girthed surface segments (534, 542, 556) shifted in the circumferential direction and in particular distributed equally.

5. Swivel joint system according to one of the claims 1 to 4, **characterised in that** on the end facing the conical collar (310) the centring element (500) is provided with:
at least one chamfer (508) or a profile formed in a radial section as wedge, which is designed round the opening (502) in the circumferential direction completely or cut-off, and has an inclination angle (510) in the radial direction in regard to the swivelling axle (102), which corresponds in particular to a cone angle (312) of the conical ring collar (310), and/or
at least two, preferably three circular-segment-shaped chamfers (508) or end surfaces spaced in the circumferential direction, distributed equally in an ideal case, with an inclination angle (510) in the radial direction in regard to the swivelling axle (102), which corresponds in particular to a cone angle (312) of the conical ring collar (310).

6. The swivel joint system according to one of the claims 1 to 5, **characterised in that** the first bearing shell (120) has a first bearing (122), which interacts with at least a first locking pin girthed surface shell (340), which is positioned in the area of the distal end section (304) of the locking pin (300), whereby the locking pin (300) in the area of the first locking pin girthed surface shell (340) is centred, positioned in particular radially, with respect to the first bearing (122).

7. The swivel joint system according to one of the claims 1 or 6, **characterised in that** the second bearing shell (130) has a second bearing (132), which interacts with at least one second locking pin girthed surface shell (342), which is positioned in the area of the proximal end section (302) of the locking pin (300), whereby the locking pin (300) in the area of this second locking pin girthed surface shell (342) is centred, positioned in particular radially, with respect to the second bearing (132).

8. Swivel joint system according to one of the claims 1 to 7, **characterised in that** the first counter bearing shell (220) has a third bearing (222) which interacts with at least one third locking pin girthed surface shell (344), which is positioned axially between the first and the second bearing shell (120, 130), in particular in the area of the distal end section (304), whereby the locking pin (300) in the area of this third locking pin girthed surface shell (344) is centred, positioned in particular radially, with respect to the third bearing (222).

9. Swivel joint system according to one of the claims 1 to 8, **characterised in that** the second counter bearing shell (230) has a fourth bearing (232) which interacts with a fourth locking pin girthed surface shell (346), which is positioned axially between the first and the second bearing shell (120, 130), in particular in the area of the proximal end section (302) of the locking pin (300), whereby the locking pin (300) in the area of this fourth locking pin girthed surface shell (346) is centred, positioned in particular radially, with respect to the fourth bearing (232).

10. Swivel joint system according to one of the claims 1 to 9, **characterised in that** the connection between the locking pin (300) and the locking shell (140) is designed as a bayonet connection (320, 330), as quick lock connection, as snap-lock connection and/or as splint connection.

11. Swivel joint system according to one of the claims 1 to 10, **characterised in that** the connection between the locking pin (300) and the locking shell (140) is positioned in the first bearing section (120) and/or in the second bearing section (130).

12. Swivel joint system according to claims 1 to 11, **characterised in that** the swivel joint system (10) is designed as a friction joint.

13. Swivel joint system according to claims 1 to 11, **characterised in that** the swivel joint system (10) is designed as a latching hinge joint, and
that in particular the first bearing shell (120) has a first latching surface (110) that is designed at least in sections mainly vertically to the joint axle (102), and that the first counter bearing shell (220) has a second latching surface (226) designed at least in sections mainly vertically to the joint axle (102), with the second latching surface (226) being complementary to the first latching surface (110) and interacting with it, or
that a girthed surface shell of the bush bearing (210) has a first latching surface and the first articulated arm (100) has a surface shell designed between the first and second bearing shell (120, 130), which has a second latching surface that is complementary to the first latching surface and interacts with it.

14. Mirror holder for attaching a mirror to a vehicle, **characterised by** a swivel joint system according to one of the claims 1 to 13.

15. Mirror arrangement with a mirror head and a mirror holder according to claim 14.

## Revendications

1. Dispositif d'articulation (10), en particulier pour une fixation pivotante d'un rétroviseur extérieur sur un véhicule (20), avec :
un premier bras articulé (100) qui présente une première et une seconde parties de palier (120, 130) et au moins une partie de verrouillage (140),
un second bras articulé (200) avec une partie d'extrémité (202), qui présente une douille de palier (210), dans lequel la douille de palier est agencée entre la première et la seconde parties de palier (120, 130) et présente une première partie de contre-palier (220) qui coopère avec la première partie de palier (120) et une seconde partie de contre-palier (230) qui coopère avec la seconde partie de palier (130), dans lequel le second bras articulé (200) est précontraint dans une direction axiale contre le premier bras articulé (100) au moyen d'un élément de ressort (400) et peut être pivoté autour d'un axe d'articulation (102) ;
un boulon de verrouillage (300) avec une tête de boulon (306) agencée au niveau d'une partie d'extrémité proximale (302) et une partie d'extrémité distale (304) pour une liaison pivotante des deux bras articulés (100, 200), dans lequel le boulon de verrouillage traverse la première partie de palier (120), la douille de palier (210) et la seconde partie de palier (130) avec une tige de boulon (308) et est bloqué au moins axialement dans ladite au moins une partie de verrouillage (140) ; et
un élément de centrage (500), lequel présente une ouverture (502) traversable depuis la tige de boulon (308) et une surface d'appui (506) encerclant l'ouverture (502) pour soutenir une extrémité (404) de l'élément de ressort (400),
**caractérisé en ce que** l'élément de centrage (500), du fait de l'élément de ressort (400), est appuyé dans la direction de la partie d'extrémité proximale (302) du boulon de verrouillage (300) et **en ce qu'**il présente en outre :
une surface extérieure périphérique (504), laquelle sous l'effet d'une force axiale exercé par l'élément de ressort (400) peut être déployée radialement ou présente des propriétés élastiques nécessaires au déploiement, de telle sorte que l'élément de centrage (500) et donc le boulon de verrouillage (300) se centre par rapport à la seconde partie de palier (130) ou à la seconde partie de contre-palier (230), et est logé radialement.

2. Dispositif d'articulation selon la revendication 1, **caractérisé en ce que** la surface extérieure périphérique (504) de l'élément de centrage (500) peut être appliquée contre une surface intérieure de la seconde partie de palier (130) ou de la seconde partie de contre-palier (230) et peut être déployée contre un épaulement annulaire (310) conique du boulon de verrouillage (300) sous l'effet d'une force axiale exercé par l'élément de ressort (400).

3. Dispositif d'articulation selon la revendication 1 ou 2, **caractérisé en ce que** le boulon de verrouillage (300) présente une tête de boulon (306) formée au niveau de la partie d'extrémité proximale (302) et la tige de boulon (308) qui s'étend depuis la tête de boulon (306) jusqu'à la partie d'extrémité distale (304), dans lequel l'épaulement annulaire (310) conique est formé au niveau du passage de la tige de boulon (308) à la tête de boulon (306),
**en ce que** l'élément de ressort (400) présente une première extrémité (402) et une seconde extrémité (404), dans lequel, la première extrémité (402) s'appuie directement ou indirectement en particulier sur le second bras articulé, environ dans la région de la première partie de contre-palier (220),
**en ce que** l'élément de centrage (500) est agencé entre la seconde extrémité (404) de l'élément de ressort (400) et l'épaulement annulaire (310), de sorte que la seconde extrémité (404) s'appuie contre l'épaulement annulaire (310) en passant par l'élément de centrage (500), et
**en ce que** l'élément de centrage (500) est ainsi formé qu'il peut se déployer radialement sous l'effet de la force élastique de l'élément de ressort (400) exercé contre l'épaulement annulaire (310) axialement en direction de la tête de boulon (306).

4. Dispositif d'articulation selon l'une quelconque des revendications 1 à 3, **caractérisé en ce que** l'élément de centrage (500) présente un des arrangements suivants, en particulier d'un seul tenant et/ou fabriqué dans un matériau élastique :
A) la surface extérieure périphérique (504) de l'élément de centrage (500) est une surface tournant dans une direction circonférentielle, en particulier l'élément de centrage est un anneau, notamment un joint torique ou un disque annulaire (520),
B) l'élément de centrage (500) a, s'étendant dans une direction radiale, une fente (522) qui au niveau de son extrémité intérieure radiale débouche sur l'ouverture (502) et au niveau de son extrémité extérieure radiale est ouverte, et la surface extérieure périphérique (504) est une surface tournant dans une direction circonférentielle à l'exception de la partie ouverte du fait de la fente (522), ou
C) la surface extérieure périphérique (504) de l'élément de centrage (500) comprend au moins deux, de préférence trois, segments de surface d'enveloppe (534, 542, 556) agencés, décalés dans une direction circonférentielle, en particulier répartis uniformément.

5. Dispositif d'articulation selon l'une quelconque des revendications 1 à 4, **caractérisé en ce que** l'élément de centrage (500) au niveau de son extrémité tournée vers l'épaulement annulaire (310) conique :
- au moins un biseau (508) ou un profil formé dans une coupe radiale en tant que taquet, qui est formé de façon intermittente ou continue autour de l'ouverture (502) dans une direction circonférentielle et présente dans une direction radiale par rapport à l'axe d'articulation (102) un angle d'inclinaison (510) qui correspond en particulier à un angle de cône (312) de l'épaulement annulaire (310) conique, et/ou
- au moins deux, de préférence trois, biseaux (508) ou surfaces d'extrémité en forme de segments de cercle, agencé(e)s, espacé(e)s dans une direction circonférentielle, de préférence réparti(e)s uniformément, qui présentent dans une direction radiale par rapport à l'axe d'articulation (102) un angle d'inclinaison (510) qui correspond en particulier à un angle de cône (312) de l'épaulement annulaire (310) conique.

6. Dispositif d'articulation selon l'une quelconque des revendications 1 à 5, **caractérisé en ce que** la première partie de palier (120) présente un premier collet de palier (122) qui coopère avec au moins une première partie de surface d'enveloppe de boulon de verrouillage (340), laquelle est agencée dans la région de la partie d'extrémité distale (304) du boulon de verrouillage (300),
de telle sorte que le boulon de verrouillage (300) dans la région de cette première partie de surface d'enveloppe de boulon de verrouillage (340) est centré, en particulier logé radialement, par rapport au premier collet de palier (122).

7. Dispositif d'articulation selon l'une quelconque des revendications 1 à 6, **caractérisé en ce que** la seconde partie de palier (130) présente un deuxième collet de palier (132) qui coopère avec au moins une deuxième partie de surface d'enveloppe de boulon de verrouillage (342), laquelle est agencée dans la région de la partie d'extrémité proximale (302) du boulon de verrouillage (300),
de telle sorte que le boulon de verrouillage (300) dans la région de cette seconde partie de surface d'enveloppe de boulon de verrouillage (342) est centré, en particulier logé radialement, par rapport au deuxième collet de palier (132).

8. Dispositif d'articulation selon l'une quelconque des revendications 1 à 7, **caractérisé en ce que** la première partie de contre-palier (220) présente un troisième collet de palier (222) qui coopère avec au moins une troisième partie de surface d'enveloppe de boulon de verrouillage (344), laquelle est agencée axialement entre la première et la seconde parties de palier (120, 130), en particulier dans la région de la partie d'extrémité distale (304),
de telle sorte que le boulon de verrouillage (300) dans la région de cette troisième partie de surface d'enveloppe de boulon de verrouillage (344) est centré, en particulier logé radialement, par rapport au troisième collet de palier (222).

9. Dispositif d'articulation selon l'une quelconque des revendications 1 à 8, **caractérisé en ce que** la seconde partie de contre-palier (230) présente un quatrième collet de palier (232) qui coopère avec au moins une quatrième partie de surface d'enveloppe de boulon de verrouillage (346), laquelle est agencée axialement entre la première et la seconde parties de palier (120, 130), en particulier dans la région de la partie d'extrémité proximale (302) du boulon de verrouillage (300),
de telle sorte que le boulon de verrouillage (300) dans la région de cette quatrième partie de surface d'enveloppe de boulon de verrouillage (346) est centré, en particulier logé radialement, par rapport au quatrième collet de palier (232).

10. Dispositif d'articulation selon l'une quelconque des revendications 1 à 9, **caractérisé en ce que** la liaison entre le boulon de verrouillage (300) et la partie de verrouillage (140) est formée en tant que liaison à baïonnette (320, 330), en tant que liaison à verrouillage rapide, en tant que liaison à encliquetage et/ou en tant que liaison cannelée.

11. Dispositif d'articulation selon l'une quelconque des revendications 1 à 10, **caractérisé en ce que** la liaison entre le boulon de verrouillage (300) et la partie de verrouillage (140) est agencée dans la première partie de palier (120) et/ou dans la seconde partie de palier (130).

12. Dispositif d'articulation selon l'une quelconque des revendications 1 à 11, **caractérisé en ce que** le dispositif d'articulation (10) est formé en tant qu'articulation à friction.

13. Dispositif d'articulation selon l'une quelconque des revendications 1 à 11, **caractérisé en ce que** le dispositif d'articulation (10) est formé en tant qu'articulation à verrouillage, et
**en ce qu'**en particulier la première partie de palier (120) présente une première surface de verrouillage (110) formée au moins par endroits sensiblement de façon perpendiculaire à l'axe d'articulation (102), et **en ce que** la première partie de contre-palier (220) présente une seconde surface de verrouillage (226) formée au moins par endroits sensiblement de façon perpendiculaire à l'axe d'articulation (102), laquelle seconde surface de verrouillage est complémentaire de la première surface de verrouillage (110) et coopère avec celle-ci, ou
**en ce qu'**une partie de surface d'enveloppe de la douille de palier (210) présente une première surface de verrouillage et le premier bras articulé (100) présente une partie de surface formée entre la première et la seconde parties de palier (120, 130), laquelle partie de surface est complémentaire de la première surface de verrouillage et coopère avec celle-ci.

14. Monture de rétroviseur pour fixer un rétroviseur sur un véhicule, **caractérisé par** un dispositif d'articulation selon l'une quelconque des revendications 1 à 13.

15. Agencement de rétroviseur doté d'une tête de rétroviseur et d'une monture de rétroviseur selon la revendication 14.
